(19) Europäisches Patentamt
European Patent Office
Office européen des brevets

(11) **EP 4 181 048 A1**

(12) **EUROPEAN PATENT APPLICATION**
published in accordance with Art. 153(4) EPC

(43) Date of publication:
**17.05.2023 Bulletin 2023/20**

(21) Application number: **20944281.3**

(22) Date of filing: **09.07.2020**

(51) International Patent Classification (IPC):
**G06Q 50/10** *(2012.01)*

(52) Cooperative Patent Classification (CPC):
**G06Q 50/10**

(86) International application number:
**PCT/JP2020/026858**

(87) International publication number:
**WO 2022/009388 (13.01.2022 Gazette 2022/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventors:
• **SAKAMOTO, Takuya**
  **Kawasaki-shi, Kanagawa 211-8588 (JP)**
• **TAKAHASHI, Yasushi**
  **Kawasaki-shi, Kanagawa 211-8588 (JP)**
• **MIYAMAE, Takeshi**
  **Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING SYSTEM AND CONTROL METHOD**

(57) A system including: a first information processing device configured to: transmit one or more certificates issued to a specific user; acquire one or more pieces of encrypted information each including identification information of a user, and encrypted with a public key of the user to whom the certificate is issued; generate one or more pieces of decryption information that respectively correspond to the one or more pieces of encrypted information by decrypting the one or more pieces of encrypted information; and transmit the one or more pieces of decryption information; and a second information processing device configured to: receive the one or more certificates and the one or more pieces of decryption information; and evaluate a submission status of the certificate by the specific user based on the number of one or more certificates and the number of pieces of decryption information including the identification information of the specific user.

FIG. 3

EP 4 181 048 A1

**Description**

FIELD

The present invention relates to an information processing system and the like.

BACKGROUND

Crypto-assets such as bitcoin are attracting attention around the world, and various research and development efforts are underway to utilize the underlying blockchain technology. As one of the various research and development efforts, Sovrin Foundation, Decentralized Identity Foundation and the like are developing the technology called decentralized identity and self-sovereign identity on the basis of the fact that blockchain is a decentralized trust-generating technology.

Conventionally, various internet services have managed a variety of personal attributes such as name, address, date of birth, and place of work within the services in a closed manner, making it difficult to utilize the information even though the information is the person's own information. The attributes are also called identities.

Meanwhile, in the case of a real service, not the internet, for example, a driver's license issued by a public safety commission can be used for various requirements, such as to open an account at a bank or to verify the age when purchasing alcohol. Therefore, the self-sovereign identity implements a mechanism that enables self-management of credentials that guarantee that the person's own attributes have been confirmed by a third party, and enables provision of the credentials to some services. The third party is a credential issuer and corresponds to, for example, the public safety commission.

Note that Sovrin Foundation implements trust of the credential issuers in a decentralized manner by managing a public key of the above-described third party and a method of accessing a service of the third party on the blockchain. Examples of the method of accessing a service of the third party include a method using a uniform resource locator (URL), a method that authenticates and permits access, and the like.

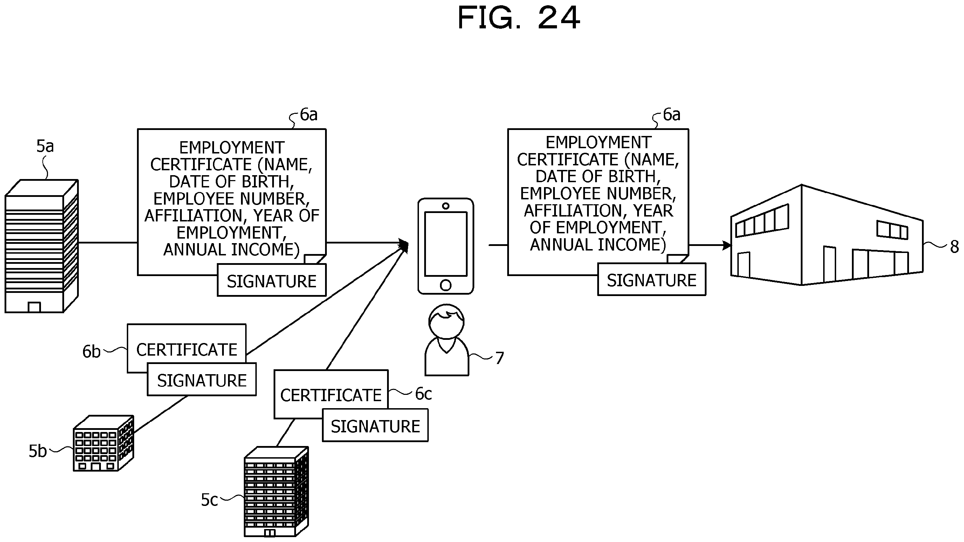

FIG. 24 is a diagram for describing an example of the self-sovereign identity. Issuers 5a, 5b, and 5c issue signed certificates 6a, 6b, and 6c to a user 7. The certificates 6a, 6b, and 6c correspond to credentials. For example, the certificate 6a issued by the issuer 5a is an employment certificate of the user 7, and includes the name, date of birth, employee number, affiliation, year of employment, annual income, and the like. In the self-sovereign identity, the user 7 himself manages the certificates 6a to 6c and can himself choose the certificate to disclose to a verifier 8. In the example of FIG. 24, an example in which the user 7 discloses the certificate 6a to the verifier 8 among the certificates 6a to 6c is illustrated.

SUMMARY

TECHNICAL PROBLEM

The self-sovereign identity allows a service provider to ask a user to disclose a certificate (credential) to be used to provide a service. Meanwhile, since the user manages the certificates, it is difficult to determine whether or not the user has disclosed all of information.

For example, in a case where a life insurance is offered as a service, the more health-related information about the user can be obtained, the better premiums can be quoted. In a case of providing such a service with the self-sovereign identity, users may not disclose health information that leads to higher premiums but only health information that leads to lower premiums.

In other words, the self-sovereign identity has a problem that it is not possible to detect submission omission of an issued certificate (credential).

In one aspect, an object of the present invention is to provide an information processing system and control method capable of detecting submission omission of an issued certificate.

SOLUTION TO PROBLEM

In a first idea, an information processing system includes a first information processing device and a second information processing device. The first information processing device includes a first transmission unit, an acquisition unit, a decryption unit, and a second transmission unit. The second information processing device includes a reception unit and an evaluation unit. The first transmission unit transmits one or more certificates issued to a specific user to the second information processing device. The acquisition unit acquires one or more pieces of encrypted information each including user identification information generated in response to issuance of a certificate to each of one or more users including the specific user, and encrypted with a public key of the user to whom the certificate is issued. The decryption unit decrypts the acquired one or more pieces of encrypted information with a private key corresponding to the public key of the specific user to generate one or more pieces of decryption information respectively corresponding to the one or more pieces of encrypted information. The second transmission unit transmits the generated one or more pieces of decryption information to the second information processing device. The reception unit receives one or more certificates transmitted by the first information processing device and the one or more pieces of decryption information transmitted by the first information processing device. The evaluation unit evaluates a submission status of the certificate by the specific user on the basis of the number of received one or more certificates and the number of pieces of decryption information including the identification information of the specific user among the received one or more pieces of decryption information.

ADVANTAGEOUS EFFECTS OF INVENTION

Submission omission of an issued certificate can be detected.

BRIEF DESCRIPTION OF DRAWINGS

FIG. 1 is a diagram for describing a reference technique.
FIG. 2 is a diagram for describing processing of an information processing system according to the present embodiment.
FIG. 3 is a diagram for describing processing of the information processing system according to the present embodiment.
FIG. 4 is a functional block diagram illustrating a configuration of an issuer terminal according to the present embodiment.
FIG. 5 is a table illustrating an example of a data structure of a user information management table.
FIG. 6 is a table illustrating an example of a data structure of encrypted issuance information.
FIG. 7 is a functional block diagram illustrating a configuration of an issuance information management server according to the present embodiment.
FIG. 8 is a table illustrating an example of a data structure of an issuance information table.
FIG. 9 is a functional block diagram illustrating a configuration of a user terminal according to the present embodiment.
FIG. 10 is a table illustrating an example of a data structure of a certificate table.
FIG. 11 is a table illustrating an example of a data structure of an encrypted issuance information table.
FIG. 12 is a diagram for describing an example of processing of a decryption unit.
FIG. 13 is a functional block diagram illustrating a configuration of the information processing device according to the present embodiment.
FIG. 14 is a table illustrating an example of a data structure of a certificate management table.
FIG. 15 is a table illustrating an example of a data structure of verification information table.
FIG. 16 is a flowchart illustrating a processing procedure of the issuer terminal according to the present embodiment.
FIG. 17 is a flowchart (1) illustrating a processing procedure of the user terminal.
FIG. 18 is a flowchart (2) illustrating a processing procedure of the user terminal.
FIG. 19 is a flowchart illustrating a processing procedure of the information processing device.
FIG. 20 is a diagram illustrating an example of a hardware configuration of a computer that implements functions similar to those of the issuer terminal according to the embodiment.
FIG. 21 is a diagram illustrating an example of a hardware configuration of a computer that implements functions similar to those of the issuance information management server according to the embodiment.
FIG. 22 is a diagram illustrating an example of a hardware configuration of a computer that implements functions similar to those of the user terminal according to the embodiment.
FIG. 23 is a diagram illustrating an example of a hardware configuration of a computer that implements functions similar to those of the user terminal according to the embodiment.
FIG. 24 is a diagram for describing an example of self-sovereign identity.

DESCRIPTION OF EMBODIMENTS

Embodiments of an information processing system and a control method disclosed in the present application will be described in detail below with reference to the drawings. Note that the present embodiments do not limit the present disclosure.

[Embodiment]

Prior to describing an information processing system according to the present embodiment, a reference technique will be described. In the reference technique, what kind of credential has been issued to a user is managed in an open place. For example, when a credential issuer issues a credential, issuance information indicating that the credential has been issued is stored on a blockchain. This allows a service provider to check the information on the blockchain and determine whether or not the user has disclosed all pieces of information.

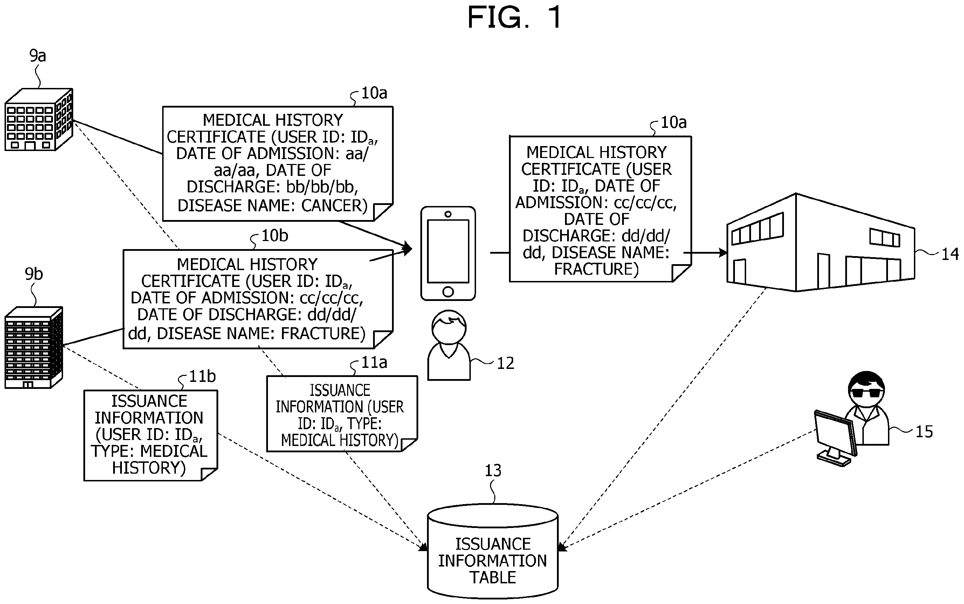

FIG. 1 is a diagram for describing the reference technique. In the example illustrated in FIG. 1, in a case where an issuer 9a has issued a certificate (medical history certificate) 10a to a user 12, the issuer 9a generates an issuance certificate 11a and registers the issuance certificate 11a in an issuance information storage unit 13 on a blockchain. The certificate 10a includes a user ID "$ID_a$", a date of admission "aajaajaa", a date of discharge "bb/bb/bb", and a disease name "cancer". The issuance information includes the user ID "$ID_a$" and a type "medical history". The user ID is information for identifying a user, and the user ID of the user 12 is assumed to be "$ID_a$".

In a case where an issuer 9b has issued a certificate (medical history certificate) 10b to the user 12, the issuer 9b generates an issuance certificate 11b and registers the issuance certificate 11b in the issuance information storage unit 13 on the blockchain. The certificate 10a includes the user ID "$ID_a$", the date of admission "cc/cc/cc", the date of discharge "dd/dd/dd", and the disease name "fracture". The issuance information includes the user ID "$ID_a$" and a type "medical history".

For example, it is assumed that the user 12 has disclosed only the certificate 10b to a verifier 14 and has not disclosed the certificate 10a. Here, when the verifier 14 refers to the issuance information storage unit 13, the pieces of issuance information 11a and 11b of the issuance information having the user ID "$ID_a$" and the type "medical history" are registered. When the user ID of the user 12 is "$ID_a$", the verifier 14 can determine that there are two certificates regarding the medical history issued to the user 12. The verifier 14 can determine that the user 12 has not disclosed all the certificates regarding the medical history because the number of certificates disclosed by the user 12 is one.

However, in the reference technique described in FIG. 1, a third party user 15 can refer to the number of certificates issued to the user 12 with the user ID "$ID_a$". As a result, the user 12 may be presumed to have a long medical history, for example, which may lead to a privacy leak problem.

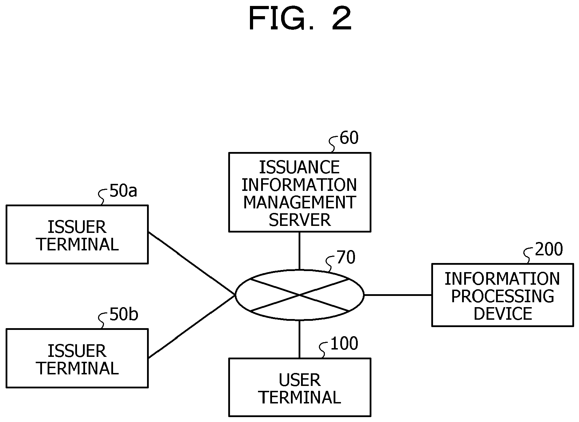

Next, a configuration of the information processing system according to the present embodiment will be described. FIG. 2 is a diagram illustrating the configuration of the information processing system according to the present embodiment. As illustrated in FIG. 2, the information processing system includes issuer terminals 50a and 50b, an issuance information management server 60, a user terminal 100, and an information processing device 200. The issuer terminals 50a and 50b, the issuance information management server 60, the user terminal 100, and the information processing device 200 are interconnected via a network 70.

The user terminal 100 is an example of a "first information processing device". The information processing device 200 is an example of a "second information processing device".

The issuer terminals 50a and 50b are devices that issue certificate information (credentials) to the user. The issuer terminals 50a and 50b are collectively referred to as "issuer terminal(s) 50" as appropriate. When issuing the certificate information, the issuer terminal 50 generates issuance information indicating that the certificate information has been issued and encrypts the issuance information with a public key of the user. The issuance information that is encrypted is referred to as encrypted issuance information. The issuer terminal 50 transmits the encrypted issuance information to the issuance information management server 60. The encrypted issuance information is an example of "encrypted information".

Although FIG. 2 illustrates the issuer terminals 50a and 50b, the information processing system according to the present embodiment may include other issuer terminals.

The issuance information management server 60 is a server that holds the encrypted issuance information transmitted from the issuer terminal 50. The issuance information management server 60 may store the encrypted issuance information using a blockchain mechanism.

The user terminal 100 is a terminal of the user who requests issuance of a certificate. The user terminal 100 issues issuance request of the certificate information to the issuer terminal 50 and receives the certificate information according to an operation of the user or the like. The user terminal 100 transmits the certificate information to the information processing device 200 in a case of receiving a predetermined service from the information processing device 200. In the case of transmitting the certificate information, the user terminal 100 transmits, to the information processing device 200, verification information for verifying whether or not the certificate information to be disclosed is appropriately disclosed. As will be described below, the verification information is generated on the basis of the encrypted issuance information acquired from the issuance information management server 60.

Although FIG. 2 illustrates the user terminal 100, the information processing system according to the present embodiment may include user terminals of other users.

The information processing device 200 is a device that provides the user terminal 100 with a predetermined service. The information processing device 200 requests the user terminal 100 to disclose the certificate information in the case of providing the predetermined service. The information processing device 200 receives the certificate information and the verification information from the user terminal 100, and evaluates whether or not the certificate information to be disclosed is appropriately disclosed according to the verification information. The information processing device 200 provides the user terminal 100 with the service in a case where the certificate information to be disclosed is appropriately disclosed.

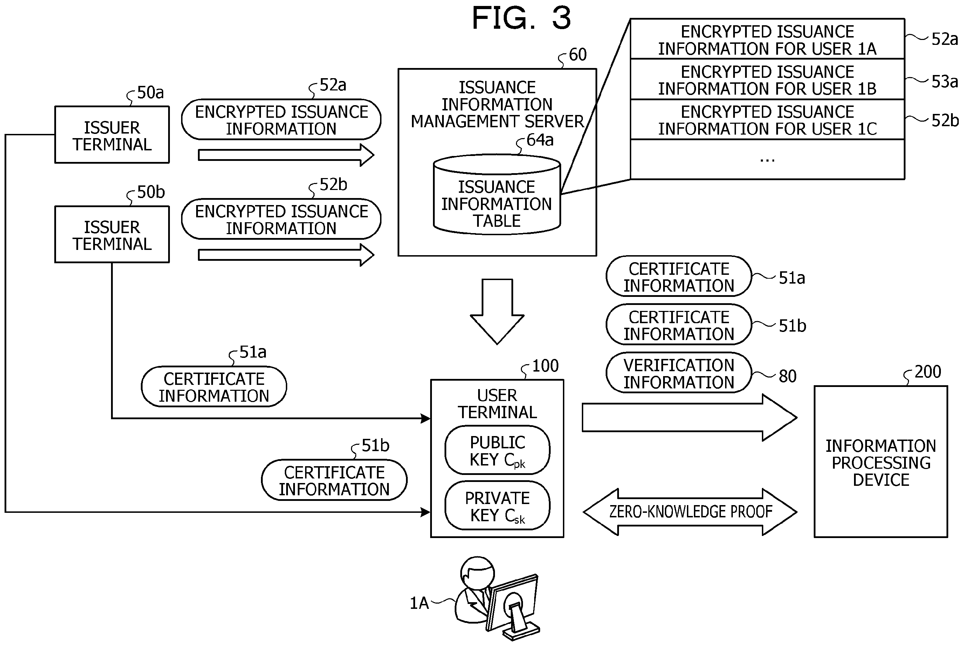

Next, an example of processing of the information processing system according to the present embodiment will be described. FIG. 3 is a diagram for describing processing of the information processing system according to the present embodiment.

The issuer terminal 50 manages some information regarding users (a user 1A and other users), and transmits such information as the certificate information to the user terminal that has issued the issuance request. Some information regarding users includes, for example, employment information, medical history information, educational background information, possessed qualification information, and the like of the users. In the case of issuing the certificate information, the issuer terminal 50 guarantees validity of the certificate information by adding an electronic signature to the certificate information.

The user 1A operates the user terminal 100 and accesses the issuer terminal 50, and issues the issuance request of the certificate after executing authentication using the user ID, a password, and the like. The user terminal 100 has a "public key $C_{pk}$" and a "private key $C_{sk}$" of the user 1A. The user terminal 100 transmits the public key $C_{pk}$ to the issuer terminal 50 in the case of issuing the issuance request of the certificate to the issuer terminal 50.

The issuer terminal 50 generates the certificate information corresponding to the successfully authenticated user 1A, and transmits the generated certificate information to the user terminal 100. When having generated the certificate information, the issuer terminal 50 generates the issuance information and encrypts the issuance information with the public key $C_{pk}$ to generate the encrypted issuance information. For example, the issuance information includes the user ID that identifies the user and a random number. The issuer terminal 50 generates the random number at the timing of generating the issuance information. The issuer terminal 50 transmits the encrypted issuance information to the issuance information management server 60 to register the encrypted issuance information in an issuance information table 64a.

For example, the issuer terminal 50a transmits certificate information 51a to the user terminal 100. The issuer terminal 50a transmits encrypted issuance information 52a to the issuance information management server 60 to register the encrypted issuance information 52a in the issuance information table 64a. The issuer terminal 50b transmits certificate information 51b to the user terminal 100. The issuer terminal 50b transmits encrypted issuance information 52b to the issuance information management server 60 to register the encrypted issuance information 52b in the issuance information table 64a.

The issuer terminal 50 generates the certificate information and the encrypted issuance information by executing the above-described processing even in a case of accepting the issuance request of the certificate from the user terminal of a user other than the user 1A. The encrypted issuance information is encrypted with the public key transmitted from the user terminal that has issued the issuance request. The issuer terminal 50 transmits the certificate information to the user terminal that has issued the issuance request, transmits the encrypted issuance information to the issuance information management server 60, and registers the encrypted issuance information in the issuance information table 64a.

The issuance information management server 60 includes the issuance information table 64a. Each time receiving the encrypted issuance information from the issuer terminal 50, the issuance information management server 60 registers the received encrypted issuance information in the issuance information table 64a. A plurality of pieces of the encrypted issuance information held by the issuance information table 64a become issuance information encrypted with the public key of each user.

In the example illustrated in FIG. 2, the issuance information table 64a includes the pieces of encrypted issuance information 52a and 52b for the user 1A and encrypted issuance information 53a for a user 1B. The pieces of encrypted issuance information 52a and 52b are issuance information encrypted with the public key of the user 1A. The encrypted issuance information 53a is issuance information encrypted with the public key of the user 1B. Illustration of the user 1B is omitted.

The user terminal 100 executes the following processing in the case of receiving the service from the information processing device 200. The user terminal 100 transmits the pieces of certificate information 51a and 51b received from the issuer terminal 50 to the information processing device 200.

The user terminal 100 acquires all pieces of encrypted issuance information included in the issuance information table 64a from the issuance information management server 60. The user terminal 100 decrypts each of the acquired pieces of encrypted issuance information with the user's own private key $C_{sk}$ to generate each decryption information. It is assumed that one piece of decryption information is generated for one piece of encrypted issuance information.

Of the plurality of pieces of encrypted issuance information acquired from the issuance information management server 60, the encrypted issuance information encrypted with the public key $C_{pk}$ of the user 1A is normally decrypted with the private key $C_{sk}$ of the user 1A. The successfully decrypted decryption information includes the user ID of the user 1A and the random number.

Meanwhile, the issuance information encrypted with a key other than the public key of the user 1A is not normally decrypted with the private key $C_{sk}$ of the user 1A. The decryption information that is not normally decrypted includes a meaningless character string or the like.

The user terminal 100 registers the normally decrypted decryption information and the decryption information that has not been normally decrypted in verification information 80 and transmits the verification information 80 to the information processing device 200. In the example illustrated in FIG. 3, the number of pieces of normally decrypted decryption information is "2", and the other pieces of decryption information are pieces of the decryption information that are not normally decrypted.

The information processing device 200 receives the pieces of certificate information 51a and 51b and the verification information 80 from the user terminal 100. The information processing device 200 evaluates the submission status of the certificate information on the basis of the number of pieces of certificate information received from the user terminal 100 and the number of normally decrypted decryption information among the pieces of decryption information included in the verification information 80.

In a case where the number of pieces of certificate information received from the user terminal 100 matches the number of pieces of normally decrypted decryption information, the information processing device 200 determines that the submission status of the certificate by the user is appropriate. In the example described in FIG. 3, regarding the certificate information transmitted from the user terminal 100, the number of pieces of certificate information 51a and 51b is "2" and the number of pieces of normally decrypted decryption information in the verification information 80 is "2", and thus the submission status of the certificate by the user 1A is determined to be appropriate.

Note that the user terminal 100 and the information processing device 200 perform zero-knowledge proof processing regarding the private key $C_{sk}$. This makes it possible to prove that the user terminal 100 has decrypted the encrypted issuance information with the private key $C_{sk}$.

Hereinafter, configurations of the issuer terminal 50, the issuance information management server 60, the user terminal 100, and the information processing device 200 described with reference to FIGs. 2 and 3 will be described in order.

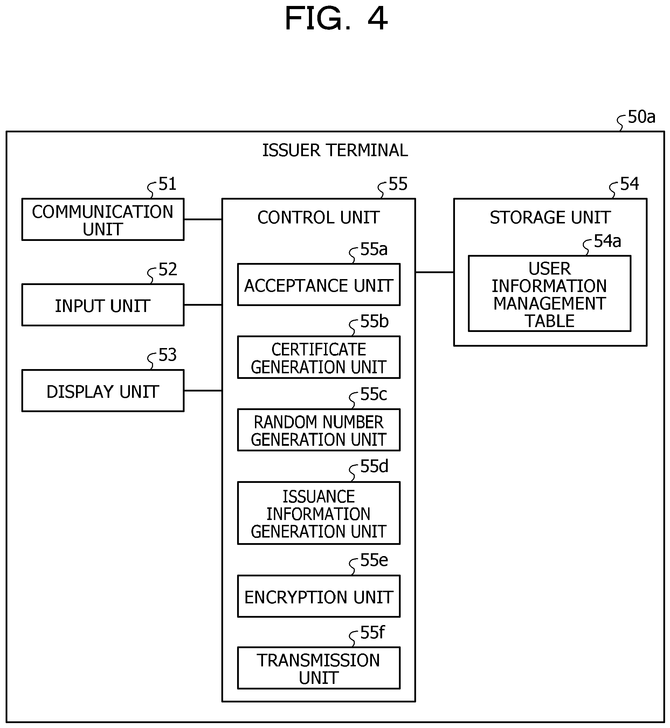

FIG. 4 is a functional block diagram illustrating a configuration of the issuer terminal according to the present embodiment. In FIG. 4, the configuration of the issuer terminal 50a will be described as an example, but the configuration of the issuer terminal 50b corresponds to the configuration of the issuer terminal 50a. As illustrated in FIG. 4, the issuer terminal 50 includes a communication unit 51, an input unit 52, a display unit 53, a storage unit 54, and a control unit 55.

The communication unit 51 transmits and receives information to and from the issuance information management server 60, the user terminal 100, and the like via the network 70. For example, the communication unit 51 is implemented by a network interface card (NIC) or the like.

The input unit 52 is an input device for inputting various types of information to the issuer terminal 50a. The input unit 52 corresponds to a keyboard, a mouse, a touch panel, or the like.

The display unit 53 is a display device that displays information output from the control unit 55. The display unit 53 corresponds to a liquid crystal display, an organic electro luminescence (EL) display, a touch panel, or the like.

The storage unit 54 includes a user information management table 54a. The storage unit 54 is implemented by, for example, a semiconductor memory element such as a random access memory (RAM) or a flash memory, or a storage device such as a hard disk or an optical disk.

The user information management table 54a is information used for generating the certificate information, and includes, for example, the employment information, medical history information, educational background information, possessed qualification information, and the like of the user. Here, as an example, the user information management table 54a is assumed to hold the medical history information of each user.

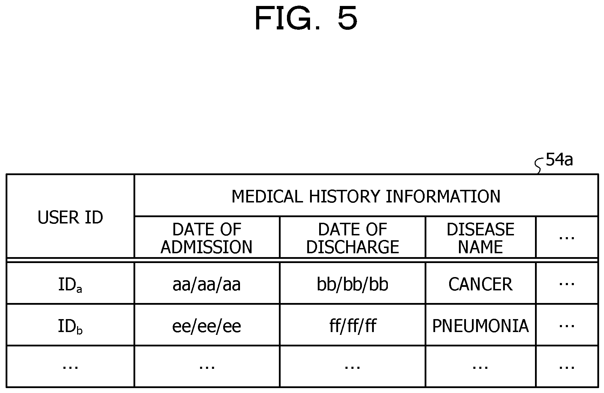

FIG. 5 is a table illustrating an example of a data structure of the user information management table. As illustrated in FIG. 5, the user information management table 54a associates the user ID with the medical history information. The user ID is information that uniquely identifies the user. The medical history information indicates the medical history of the user. The medical history information associates the date of admission, the date of discharge, and the disease name.

The description returns to FIG. 4. The control unit 55 includes an acceptance unit 55a, a certificate generation unit 55b, a random number generation unit 55c, an issuance information generation unit 55d, an encryption unit 55e, and a transmission unit 55f. The control unit 55 is implemented by, for example, a central processing unit (CPU) or a micro processing unit (MPU). Furthermore, the control unit 55 may be executed by, for example, an integrated circuit such as an application specific integrated circuit (ASIC) or a field programmable gate array (FPGA).

When accepting an access from the user terminal 100, the acceptance unit 55a executes authentication processing using the user ID and the password. The acceptance unit 55a is assumed to hold information of a correct combination of the user ID and the password, and execute the authentication processing using the information.

The acceptance unit 55a accepts information of the issuance request of the certificate from the user terminal 100 in a case where the authentication of the user terminal 100 is successful. In the following description, the information of the issuance request of the certificate is referred to as "issuance request information". It is assumed that the issuance request information includes information for identifying the user terminal that has issued the issuance request, the user ID, and the public key $C_{pk}$. The acceptance unit 55a outputs the issuance request information to the certificate generation unit 55b, the random number generation unit 55c, the issuance information generation unit 55d, and the encryption unit 55e.

The certificate generation unit 55b is a processing unit that generates the certificate information in the case of accepting the issuance request information from the acceptance unit 55a. The certificate generation unit 55b compares the user ID of the issuance request information with the user information management table 54a, and acquires the medical history information corresponding to the user ID. In the example illustrated in FIG. 5, the medical history information includes the date of admission, the date of discharge, the disease name, and the like.

The certificate generation unit 55b generates the certificate information by adding an electronic signature to the acquired medical history information. The certificate generation unit 55b outputs the generated certificate information to the transmission unit 55f. The certificate generation unit 55b may add type information and date and time information, which will be described below, to the certificate information.

The random number generation unit 55c is a processing unit that generates a random number in a case of accepting the issuance request information from the acceptance unit 55a. The random number generation unit 55c outputs the generated random number to the issuance information generation unit 55d.

The issuance information generation unit 55d is a processing unit that generates the issuance information indicating that the certificate information has been issued. The issuance information generation unit 55d generates the issuance information by linking the user ID included in the issuance request information and the random number accepted from the random number generation unit 55c.

The issuance information generation unit 55d adds the type information and date and time information to the issuance information. The type information is information indicating the type of user information stored in the user information management table 54a. For example, in the case where the user information is medical history information, the type information is "medical history". In the case where the user information is employment information, the type information is "employment". In the case where the user information is educational background information, the type information is "educational background". In the case where the user information is possessed qualification information, the type information is "qualification".

Since the user information in the user information management table 54a illustrated in FIG. 5 is the medical history information, the issuance information generation unit 55d adds the type information "medical history" to the issuance information.

The issuance information generation unit 55d sets the date and time when the issuance request information is accepted from the acceptance unit 55a as the date and time information, and adds the date and time information to the issuance information. The issuance information generation unit 55d is assumed to acquire the date and time from a timer (not illustrated).

The issuance information generation unit 55d outputs the issuance information to which the type information and the date and time information are attached, to the encryption unit 55e.

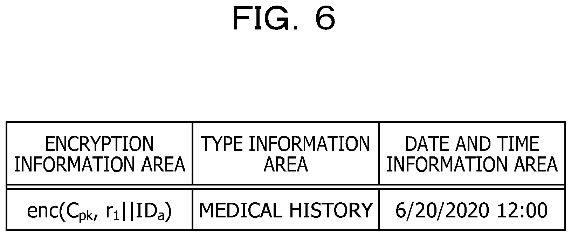

The encryption unit 55e is a processing unit that encrypts the issuance information with the public key included in the issuance request information to generate the encrypted issuance information. The encryption unit 55e outputs the encrypted issuance information to the transmission unit 55f. FIG. 6 is a table illustrating an example of a data structure of the encrypted issuance information. As illustrated in FIG. 6, the encrypted issuance information includes an encryption information area, a type information area, and a date and time information area.

The encryption information area contains information obtained by encrypting the issuance information with a public key. $enc(C_{pk}, r_1 \| ID_a)$ indicates information obtained by encrypting the issuance information with the public key $C_{pk}$, the issuance information being obtained by concatenating the user ID "$ID_a$" and the random number "$r_1$".

The type information area contains the type information. The date and time information area contains the date and time information. The encryption unit 55e registers the type information and the date and time information in the type information area and the date and time information area as they are without encryption.

The transmission unit 55f transmits the certificate information to the user terminal that has issued the issuance request. For example, the transmission unit 55f transmits the certificate information to the user terminal 100. The transmission unit 55f transmits the encrypted issuance information to the issuance information management server 60.

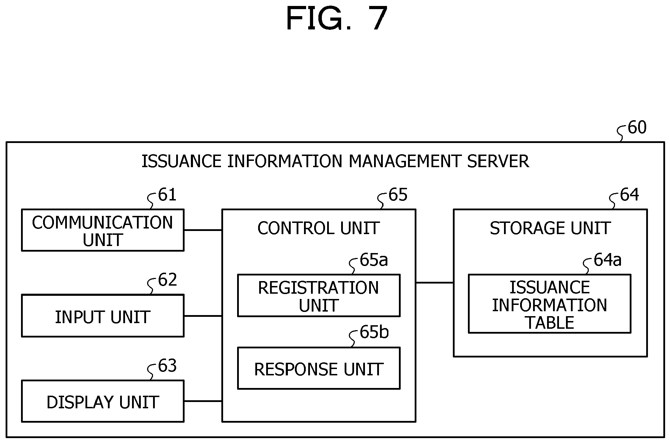

FIG. 7 is a functional block diagram illustrating a configuration of the issuance information management server according to the present embodiment. As illustrated in FIG. 7, the issuance information management server 60 includes a communication unit 61, an input unit 62, a display unit 63, a storage unit 64, and a control unit 65.

The communication unit 61 transmits and receives information to and from the issuer terminal 50, the user terminal 100, the information processing device 200 and the like via the network 70. For example, the communication unit 61 is implemented by an NIC or the like.

The input unit 62 is an input device for inputting various types of information to the issuance information management server 60. The input unit 62 corresponds to a keyboard, a mouse, a touch panel, or the like.

The display unit 63 is a display device that displays information output from the control unit 65. The display unit 63 corresponds to a liquid crystal display, an organic electro luminescence (EL) display, a touch panel, or the like.

The storage unit 64 has the issuance information table 64a. The storage unit 64 is implemented by, for example, a semiconductor memory element such as a RAM or a flash memory, or a storage device such as a hard disk or an optical disk.

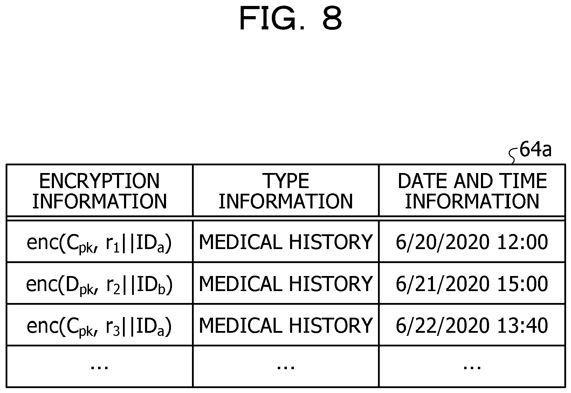

The issuance information table 64a is a table that holds the encrypted issuance information transmitted from the issuer terminal 50. FIG. 8 is a table illustrating an example of a data structure of the issuance information table. As illustrated in FIG. 8, the issuance information table 64a includes encryption information, type information, and date and time information. The encryption information is information obtained by encrypting the issuance information. The type information is information indicating the type of user information used in the case of issuing the certificate information corresponding to the issuance information. The date and time information is information indicating the date and time when the certificate information (issuance information) has been issued.

For example, it is assumed that information obtained by combining the encryption information, the type information, and the date and time information corresponds to the encrypted issuance information.

The description returns to FIG. 7. The control unit 65 includes a registration unit 65a and a response unit 65b. The control unit 65 is implemented by, for example, a CPU or an MPU. Furthermore, the control unit 65 may be implemented by, for example, an integrated circuit such as an ASIC or an FPGA.

The registration unit 65a is a processing unit that receives the encrypted issuance information from the issuer terminal 50 and registers the received encrypted issuance information in the issuance information table 64a.

The response unit 65b transmits the encrypted issuance information registered in the issuance information table 60a to the user terminal 100 in the case of accepting the issuance information request from the user terminal 100. The response unit 65b transmits all pieces of encrypted issuance information registered in the issuance information table 64a to the user terminal 100 in a case where the issuance information request does not include specification of the type information and the date and time information.

In a case where predetermined type information is specified in the issuance information request, the response unit 65b detects the encrypted issuance information corresponding to the specified type information from the issuance information table 64a. The response unit 65b transmits the detected encrypted issuance information to the user terminal 100. In the following description, the specified predetermined type information is referred to as "specified type information".

In a case where a date and time period is specified in the issuance information request, the response unit 65b detects the encrypted issuance information corresponding to the specified date and time period from the issuance information table 64a. The response unit 65b transmits the detected encrypted issuance information to the user terminal 100. In the following description, the specified date and time period is referred to as a "specified date and time period".

In a case where the specified type information and the specified date and time period are specified in the issuance information request, the response unit 65b detects the encrypted issuance information corresponding to the specified type information and the specified date and time period. The response unit 65b transmits the detected encrypted issuance information to the user terminal 100.

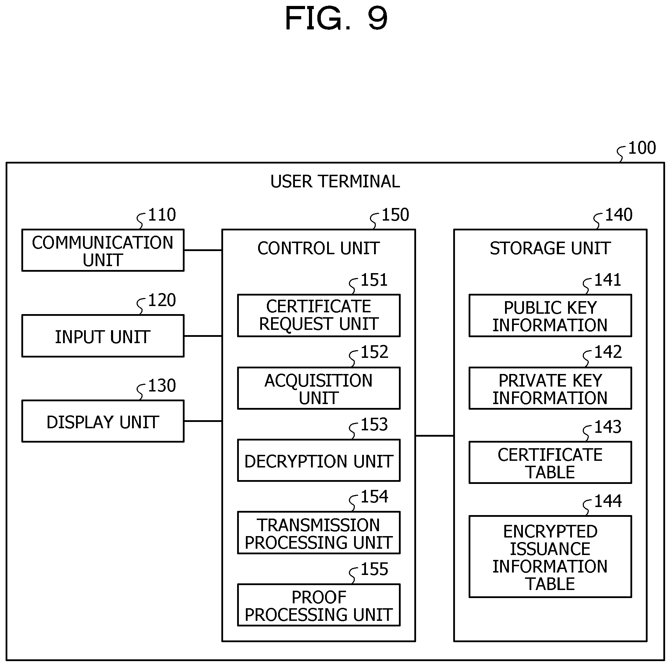

FIG. 9 is a functional block diagram illustrating a configuration of the user terminal according to the present embodiment. As illustrated in FIG. 9, the user terminal 100 includes a communication unit 110, an input unit 120, a display unit 130, a storage unit 140, and a control unit 150.

The communication unit 110 transmits and receives information to and from the issuer terminal 50, the issuance information management server 60, the information processing device 200, and the like via the network 70. For example, the communication unit 110 is implemented by an NIC or the like.

The input unit 120 is an input device that inputs various types of information to the user terminal 100. The input unit 120 corresponds to a keyboard, a mouse, a touch panel, or the like.

The display unit 130 is a display device that displays information output from the control unit 150. The display unit 130 corresponds to a liquid crystal display, an organic EL display, a touch panel, or the like.

The storage unit 140 includes public key information 141, private key information 142, a certificate table 143, and an encrypted issuance information table 144. The storage unit 140 is implemented by, for example, a semiconductor memory element such as a RAM or a flash memory, or a storage device such as a hard disk or an optical disk.

The public key information 141 is information of the public key $C_{pk}$ issued to the user terminal 100.

The private key information 142 is information of the private key $C_{sk}$ issued to the user terminal 100.

According to public key cryptography, information encrypted with the public key $C_{pk}$ can be decrypted only with the private key $C_{sk}$.

The certificate table 143 is a table that holds the certificate information issued by the issuer terminal 50. FIG.

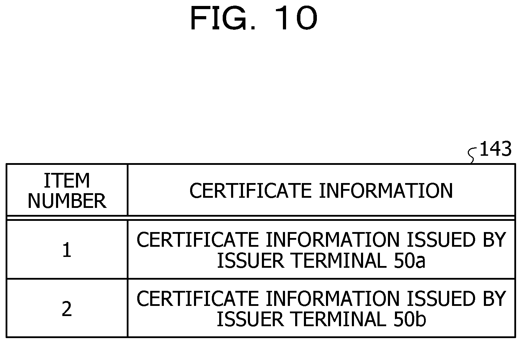

10 is a table illustrating an example of a data structure of the certificate table. As illustrated in FIG. 10, the certificate table 143 associates item numbers with the certificate information. In the example illustrated in FIG. 10, the certificate table 143 holds the certificate information issued by the issuer terminal 50a and the certificate information issued by the issuer terminal 50b.

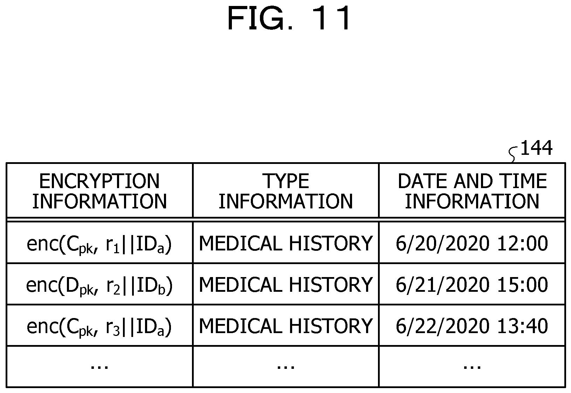

The encrypted issuance information table 144 is a table that holds encrypted issuance information acquired from the issuance information management server 60. FIG. 11 is a table illustrating an example of a data structure of the encrypted issuance information table. As illustrated in FIG. 11, the encrypted issuance information table 144 includes the encryption information, the type information, and the date and time information. Description regarding the encryption information, the type information, and the date and time information is similar to that given with reference to FIG. 8.

The description returns to FIG. 9. The control unit 150 includes a certificate request unit 151, an acquisition unit 152, a decryption unit 153, a transmission processing unit 154, and a proof processing unit 155. The control unit 150 is implemented by, for example, a CPU or an MPU. Furthermore, the control unit 150 may be implemented by, for example, an integrated circuit such as an ASIC or an FPGA.

The certificate request unit 151 is a processing unit that accesses the issuer terminal 50 and transmits issuance request information to the issuer terminal 50 in the case where the authentication is successful. For example, the certificate request unit 151 is assumed to accept specification of the issuer terminal 50 to which the certificate information is requested via the input unit 120 or the like, and access the issuer terminal 50 that has accepted the specification. The certificate request unit 151 accepts the user ID and the password from the user through the input unit 120 or the like and transmits the accepted user ID and password to the issuer terminal 50 to perform an authentication request.

The certificate request unit 151 acquires the public key $C_{pk}$ from the public key information 141. The certificate request unit 151 sets the information identifying the user terminal 100, the user ID, and the public key $C_{pk}$ in the issuance request information, and transmits the issuance request information to the specified issuer terminal 50.

The certificate request unit 151 receives the certificate information from the issuer terminal 50 that has transmitted the issuance request information. The certificate request unit 151 registers the received certificate information in the certificate table 143.

The acquisition unit 152 is a processing unit that transmits the issuance information request to the issuance information management server 60 to acquire the encrypted issuance information from the issuance information management server 60. The acquisition unit 152 registers the encrypted issuance information acquired from the issuance information management server 60 in the encrypted issuance information table 144.

In a case of accepting input of the specified type information and the specified date and time period from the input unit 120 or the like, the acquisition unit 152 sets the specified type information and the specified date and time information in the issuance information request and transmits the issuance information request into the issuance information management server 60.

Furthermore, the acquisition unit 152 may transmit the issuance information request to the issuance information management server 60 in a case of accepting a certificate information disclosure request from the information processing device 200 to be described below. The acquisition unit 152 may accept specification of the specified type information and the specified date and time period in the disclosure request. In the case where the specified type information and the specified date and time period are specified in the disclosure request, the acquisition unit 152 sets the specified type information and the specified date and time information in the issuance information request and transmits the issuance information request into the issuance information management server 60.

The decryption unit 153 is a processing unit that decrypts the encrypted issuance information registered in the encrypted issuance information table 144 using the private key $C_{sk}$. The decryption unit 153 acquires the private key $C_{sk}$ from the private key information 142.

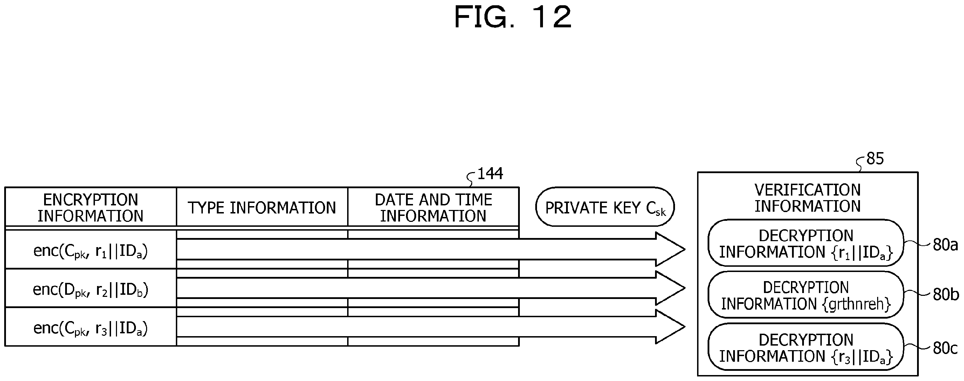

FIG. 12 is a diagram for describing an example of processing of the decryption unit. In the example illustrated in FIG. 12, it is assumed that three pieces of encrypted issuance information are registered in the encrypted issuance information table 144. The decryption unit 153 decrypts the encryption information "enc($C_{pk},r_1\|ID_a$)" with the private key $C_{sk}$ to generate decryption information 80a. Since the encryption information "enc($C_{pk},r_1\|ID_a$)" is information encrypted with the public key $C_{pk}$, the encryption information is properly decrypted and becomes information in which the random number $r_1$ and the user ID "$ID_a$" are concatenated.

The decryption unit 153 decrypts the encryption information "enc($D_{pk},r_2\|ID_b$)" with the private key $C_{sk}$ to generate decryption information 80b. Since the encryption information "enc($D_{pk},r_2\|ID_b$)" is information encrypted with a public key $D_{pk}$ of another user, the encryption information is not properly decrypted and contains an incomprehensible character string.

The decryption unit 153 decrypts the encryption information "enc($C_{pk},r_3\|ID_a$)" with the private key $C_{sk}$ to generate decryption information 80c. Since the encryption information "enc($C_{pk},r_3\|ID_a$)" is information encrypted with the public key $C_{pk}$, the encryption information is properly decrypted and becomes information in which the random number $r_3$ and the user ID "$ID_a$" are concatenated.

As described with reference to FIG. 12, in the case where three pieces of encrypted issuance information are registered in the encrypted issuance information table 144, the three pieces of decryption information 80a to 80c are generated. The decryption unit 153 registers the plurality of pieces of decryption information 80a to 80c in a verification information 85 and outputs the information to the transmission processing unit 154.

The transmission processing unit 154 is a processing unit that transmits the certificate information stored in the certificate table 143 and the verification information 85 acquired from the decryption unit 153 to the information processing device 200. The transmission processing unit 154 corresponds to a first transmission unit and a second transmission unit.

The transmission processing unit 154 may transmit all pieces of the certificate information registered in the certificate table 143 to the information processing device 200, or may transmit the certificate information specified by the user 1A via the input unit 120 to the information processing device 200. The transmission processing unit 154 may add the user ID when transmitting the certificate information and the verification information 85.

The proof processing unit 155 is a processing unit that executes data communication with the information processing device 200 to execute zero-knowledge proof, and proves that each piece of decryption information included in the verification information 85 is information decrypted with the private key $C_{sk}$. A processing procedure regarding the proof processing unit 155 will be described below.

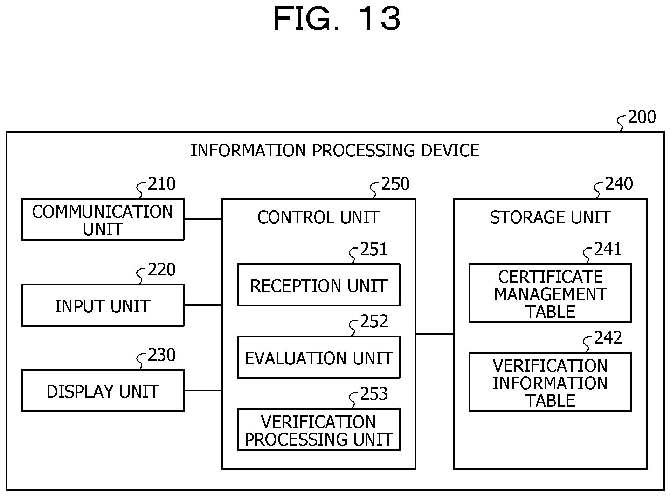

FIG. 13 is a functional block diagram illustrating a configuration of the information processing device according to the present embodiment. As illustrated in FIG. 13, the information processing device 200 includes a communication unit 210, an input unit 220, a display unit 230, a storage unit 240, and a control unit 250.

The communication unit 210 transmits and receives information to and from the issuer terminal 50, the issuance information management server 60, the user terminal 100, and the like via the network 70. For example, the communication unit 210 is implemented by an NIC or the like.

The input unit 220 is an input device that inputs various types of information to the information processing device 200. The input unit 220 corresponds to a keyboard, a mouse, a touch panel, or the like.

The display unit 230 is a display device that displays information output from the control unit 250. The display unit 230 corresponds to a liquid crystal display, an organic EL display, a touch panel, or the like.

The storage unit 240 includes a certificate management table 241 and the verification information table 242. The storage unit 240 is implemented by, for example, a semiconductor memory element such as a RAM or a flash memory, or a storage device such as a hard disk or an optical disk.

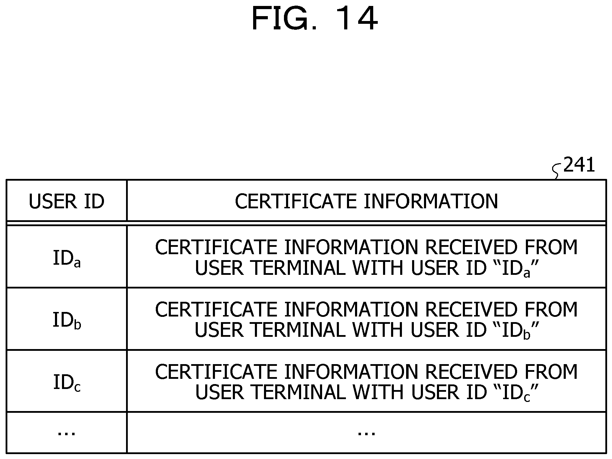

The certificate management table 241 is a table that holds the certificate information received from the user terminal. FIG. 14 is a table illustrating an example of a data structure of the certificate management table. As illustrated in FIG. 14, the certificate management table associates the user ID with the certificate information. The user ID is information that uniquely identifies the user. The certificate information corresponds to the certificate information received from the user terminal corresponding to the user ID. There may be a plurality of pieces of certificate information.

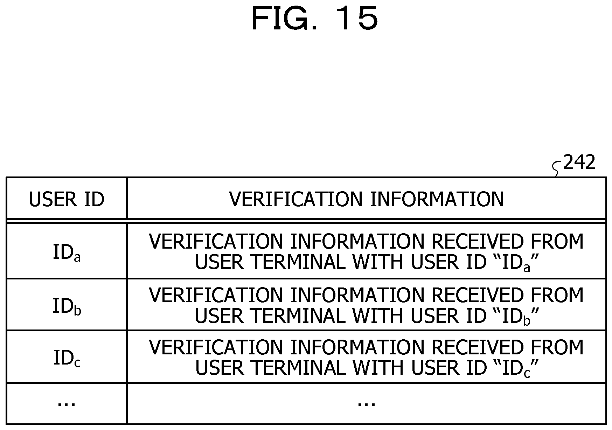

The verification information table 242 is a table that holds the verification information received from the user terminal. FIG. 15 is a table illustrating an example of a data structure of the verification information table. As illustrated in FIG. 15, the verification information table 242 associates the user ID with the verification information. The user ID is information that uniquely identifies the user. The verification information is information including the decryption information decrypted with the private key of the user.

The description returns to FIG. 13. The control unit 250 includes a reception unit 251, an evaluation unit 252, and a verification processing unit 253. The control unit 250 is implemented by a CPU or an MPU. Furthermore, the control unit 250 may be implemented by, for example, an integrated circuit such as an ASIC or an FPGA.

The reception unit 251 is a processing unit that receives the certificate information and the verification information from the user terminal 100 (or another user terminal). The reception unit 251 registers the certificate information in the certificate management table 241 in association with the user ID. The reception unit 251 registers the verification information in the verification information table 242 in association with the user ID.

For example, in the case of receiving the pieces of certificate information 51a and 51b from the user terminal 100 with the user ID "$ID_a$" as described with reference to FIG. 3, the reception unit 251 registers the certificate information 51a and 51b in the certificate management table 241 in association with the user ID "$ID_a$".

In the case where the reception unit 251 receives the verification information 85 from the user terminal 100 with the user ID "$ID_a$", the reception unit 251 registers the verification information 85 in the verification information table 242 in association with the user ID "$ID_a$".

Note that in the case of requesting the user terminal for the certificate information, the reception unit 251 may transmit, to the user terminal, information of the disclosure request specifying the specified type information and the specified date and time period.

The evaluation unit 252 is a processing unit that evaluates the submission status of the certificate information on the basis of the certificate management table 241 and the verification information table 242. The evaluation unit 252 outputs an evaluation result to the display unit 230 for display.

An example of processing of the evaluation unit 252 will be described. Here, description will be given using the certificate information and verification information received from the user terminal 100. The evaluation unit 252 acquires the certificate information corresponding to the user ID "ID$_a$" from the certificate management table 241, and counts the number of pieces of certificate information. The number of certificates is referred to as a "first number". In the example described with reference to FIG. 3, since the pieces of certificate information 51a and 51b are received from the user terminal 100 with the user ID "ID$_a$", the first number is "2".

The evaluation unit 252 acquires the verification information 85 corresponding to the user ID "ID$_a$" from the verification information table 242. In the example illustrated in FIG. 12, the verification information 85 includes the pieces of decryption information 80a to 80c. The evaluation unit 252 counts the number of properly decrypted pieces of decryption information among the pieces of decryption information 80a to 80c. The number of properly decrypted pieces of decryption information is referred to as a "second number".

For example, the evaluation unit 252 determines that the decryption information has been properly decrypted in a case where the decryption information has a predetermined pattern, and determines that the decryption information has not been properly decrypted in a case where the decryption information does not correspond to the predetermined pattern. The evaluation unit 252 sets the predetermined pattern as information in which the user ID and a numerical value by the random number are concatenated. The predetermined pattern may be agreed between the information processing device 200 and the issuer terminal 50 in advance.

In the example described with reference to FIG. 12, the pieces of decryption information 80a and 80c are information obtained by concatenating the user ID and the random number. Therefore, the evaluation unit 252 specifies the second number as "2".

In a case where the first number and the second number match, the evaluation unit 252 evaluates that the corresponding user has properly submitted the certificate information. In the above-described example, the first number = 2 and the second number = 2, so the evaluation unit 252 evaluates that the user 1A with the user ID "ID$_a$" has properly submitted the certificate information.

On the other hand, in a case where the first number and the second number do not match, the evaluation unit 252 evaluates that the corresponding user has not submitted the certificate information properly.

The verification processing unit 253 is a processing unit that executes data communication with the user terminal 100 to perform the zero-knowledge proof, and verifies that each piece of decryption information included in the verification information 85 is information decrypted with the private key C$_{sk}$ of the user terminal 100.

In the following description, zero-knowledge proof processing executed by the proof processing unit 155 of the user terminal 100 and the verification processing unit 253 of the information processing device 200 will be described. As a premise, public key cryptography RSA is assumed to be used for encryption and decryption of issuance information. A prover side is the proof processing unit 155.

In the public key cryptography RSA, encryption enc(m) of message m is calculated by equation (1) where the public key is (e, p). To decrypt the encrypted message enc(m) with a private key d, equation (2) is calculated.

$$enc(m) = m^e mod p \ ... \ (1)$$

$$m = \{enc(m)\}^d mod p \ ... \ (2)$$

The proof processing unit 155 proves to the verification processing unit 253 that k messages $m_1,..., m_k$ have been calculated with the private key d without disclosing the private key d. The message m is the decryption information included in the verification information 85. In the example illustrated in FIG. 12, messages $m_1$, $m_2$ and $m_3$ are the pieces of decryption information 80a, 80b, and 80c.

The proof processing unit 155 generates the random number r and calculates $t_1 = \{enc(m_1)\}^r mod p,..., t_k = \{enc(m_k)\}^r mod p$. The proof processing unit 155 transmits $t_1,..., t_k$ to the verification processing unit 253.

The verification processing unit 253 generates a random number c and transmits the random number c to the proof processing unit 155.

The proof processing unit 155 calculates s = r + cd and transmits s to the verification processing unit 253.

The verification processing unit 253 verifies that $\{enc(m_1)\}^s mod p$ is equal to $t_1 \times m_1{}^c,..., \{enc(m_k)\}^s$ is equal to $t_k \times m_k{}^c$. The verification processing unit 253 can verify that the decryption has been properly performed on the user terminal 100 side using the private key d in a case where all the pairs are equal.

The evaluation unit 252 described above may obtain the verification result of the verification processing unit 253 and evaluate that the corresponding user has properly submitted the certificate information in the case where the decryption has been properly performed, and the first number matches the second number.

Note that the reason why the above-described proof is correct is that the equation can be expanded as follows, and it can be seen that the verification equation is correct.

$$\{enc(m)\}^s modp = \{enc(m)\}^{r + cd} modp = \{enc(m)\}^r modp \times$$

$$\{\{enc(m)\}^d modp\}^c = t \times m^c$$

Note that obtaining r from $t_1$ and $t_k$ is difficult because it involves solving a discrete logarithm problem, and d is not able to be obtained from s = r + cd without knowing r. Therefore, the private key d is never leaked to the verifier side.

Furthermore, the verification processing unit 253 needs to know correspondence between each piece of the issuance information obtained by decrypting an encrypted portion sent from the proof processing unit 155 and each piece of the issuance information containing an encrypted portion obtained from the issuance information management server 60 (blockchain). Therefore, the issuance information management server 60 assigns a number to the issuance information, and sends the number together with the information when sending the information from the proof processing unit 155 to the verification processing unit 253. Note that, since the verification processing unit 253 obtains the issuance information (encrypted issuance information) in the same order when obtaining the issuance information from the issuance information management server 60, the information may be associated in the same order or may be associated using an ID that is assigned when the information is usually saved in the blockchain.

Next, an example of processing procedures of the issuer terminal 50, the user terminal 100, and the information processing device 200 included in the information processing system according to the present embodiment will be described.

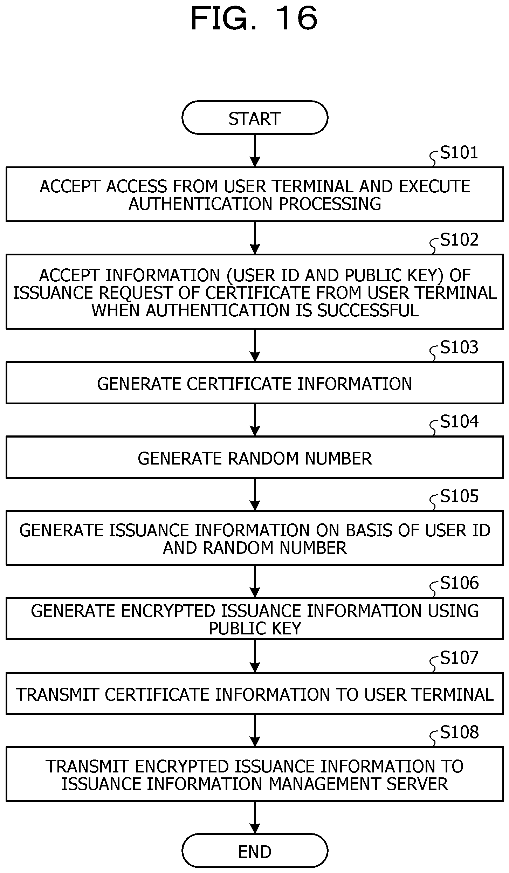

FIG. 16 is a flowchart illustrating a processing procedure of the issuer terminal according to the present embodiment. As illustrated in FIG. 16, the acceptance unit 55a of the issuer terminal 50 accepts access from the user terminal 100 and executes the authentication processing (step S101). In a case where the authentication is successful, the acceptance unit 55a accepts the issuance request of the certificate (the user ID and the public key) from the user terminal 100 (step S102).

The certificate generation unit 55b of the issuer terminal 50 generates the certificate information (step S103). The random number generation unit 55c of the issuer terminal 50 generates the random number (step S104). The issuance information generation unit 55d of the issuer terminal 50 generates the issuance information on the basis of the user ID and the random number (step S105).

The encryption unit 55e of the issuer terminal 50 generates the encrypted issuance information using the public key (step S106). The transmission unit 55f of the issuer terminal 50 transmits the certificate information to the user terminal 100 (step S107). The transmission unit 55f transmits the encrypted issuance information to the issuance information management server 60 (step S108).

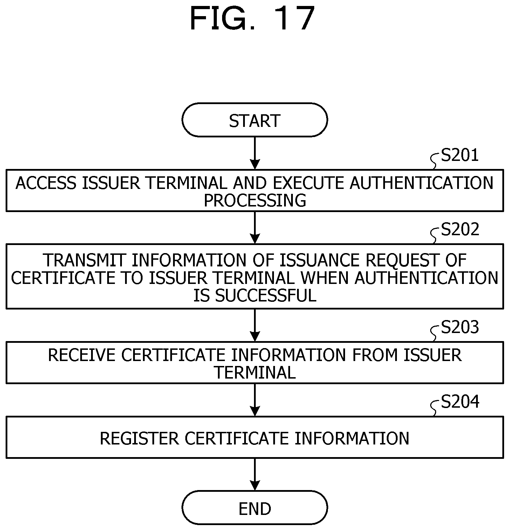

FIG. 17 is a flowchart (1) illustrating a processing procedure of the user terminal. FIG. 17 illustrates processing in which the user terminal 100 requests the issuer terminal 50 to issue the certificate information. As illustrated in FIG. 17, the certificate request unit 151 of the user terminal 100 accesses the issuer terminal 50 and executes the authentication processing (step S201).

In a case where the authentication is successful, the certificate request unit 151 transmits the information of the issuance request of the certificate to the issuer terminal 50 (step S202).

The certificate request unit 151 receives the certificate information from the issuer terminal 50 (step S203). The certificate request unit 151 registers the certificate information in the certificate table 143 (step S204).

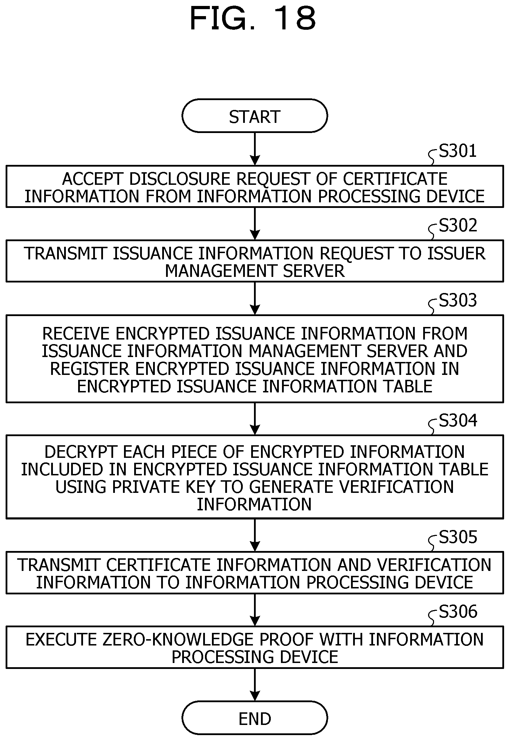

FIG. 18 is a flowchart (2) illustrating a processing procedure of the user terminal. FIG. 18 illustrates processing in a case where the user terminal 100 accepts the disclosure request of the certificate information from the information processing device 200. As illustrated in FIG. 18, the acquisition unit 152 of the user terminal 100 accepts the disclosure request of the certificate information from the information processing device 200 (step S301). The acquisition unit 152 transmits the issuance information request to the issuance information management server 60 (step S302).

The acquisition unit 152 receives the encrypted issuance information from the issuance information management server 60, and registers the encrypted issuance information in the encrypted issuance information table 144 (step S303). The decryption unit 153 of the user terminal 100 decrypts each piece of encrypted issuance information included in the encrypted issuance information table 144 using the private key to generate the verification information (step S304).

The transmission processing unit 154 of the user terminal 100 transmits the certificate information and the verification information to the information processing device 200 (step S305). The proof processing unit 155 of the user terminal 100 executes the zero-knowledge proof with the information processing device 200 (step S306).

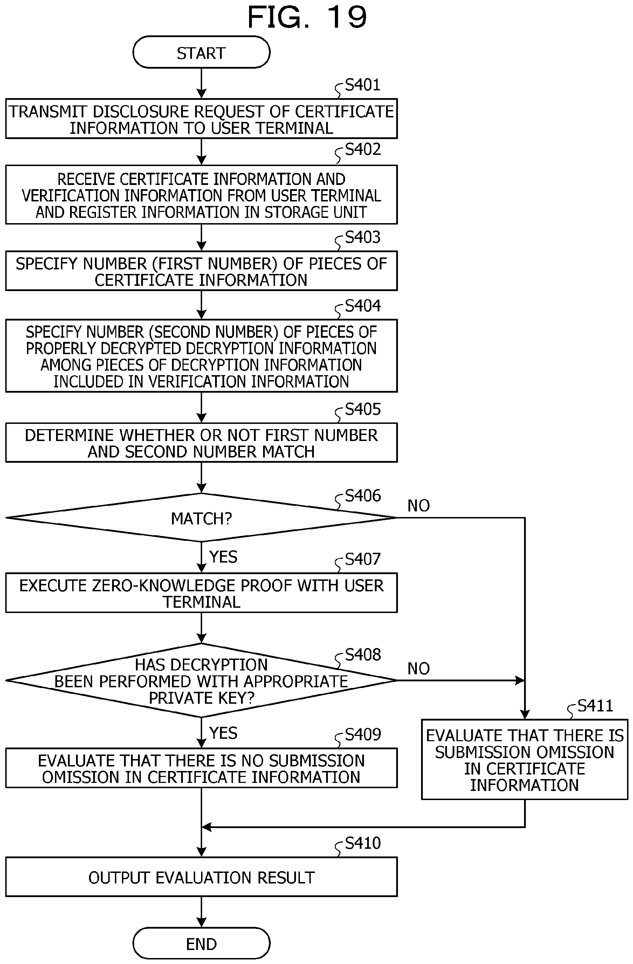

FIG. 19 is a flowchart illustrating a processing procedure of the information processing device. As illustrated in FIG. 19, the reception unit 251 of the information processing device 200 transmits the disclosure request of the certificate information to the user terminal 100 (step S401).

The reception unit 251 receives the certificate information and the verification information from the user terminal 100, and registers the information in the storage unit 240 (step S402). The evaluation unit 252 specifies the number (first number) of pieces of certificate information (step S403).

The evaluation unit 252 specifies the number (second number) of pieces of properly decrypted decryption information among the pieces of decryption information included in the verification information (step S404). The evaluation unit 252 determines whether or not the first number and the second number match (step S405).

In the case where the first number and the second number match (step S406, Yes), the evaluation unit 252 proceeds to step S407. On the other hand, in the case where the first number and the second number do not match (step S406, No), the evaluation unit 252 proceeds to step S411.

Step S407 is described. The verification processing unit 253 of the information processing device 200 executes the zero-knowledge proof with the user terminal 100 (step S407). In the case where the user terminal 100 has performed the decryption with an appropriate private key (step S408, Yes), the verification processing unit 253 proceeds to step S409. On the other hand, in the case where the user terminal 100 has not performed the decryption with an appropriate private key (step S408, No), the verification processing unit 253 proceeds to step S411.

Step S409 is described. The evaluation unit 252 evaluates that there is no submission omission in the certificate information (step S409). The evaluation unit 252 outputs the evaluation result to the display unit 230 (step S410).

Step S411 is described. The evaluation unit 252 evaluates that there is submission omission in the certificate information (step S411) and proceeds to step S410.

Next, effects of the information processing system according to the present embodiment will be described. According to the information processing system, the user terminal 100 acquires one or more pieces of encrypted issuance information from the issuance information management server 60 and decrypts the encrypted issuance information with the public key to generate a plurality of pieces of decryption information. The user terminal 100 transmits, to the information processing device 200, one or more pieces of certificate information transmitted from the issuer terminal 50 and the verification information including one or more pieces of decryption information. The information processing device 200 receives the one or more pieces of certificate information and verification information, and evaluates the submission status of the certificate information by a specific user on the basis of the first number and the second number. Therefore, the submission omission of an issued certificate can be detected.

The user terminal 100 and the information processing device 200 determine whether or not the decryption information is information decrypted with the private key $C_{sk}$ of the user terminal 100 on the basis of the zero-knowledge proof. Therefore, it is possible to suppress the user terminal 100 from deceiving the number of pieces of decryption information that can be properly decrypted, using a key other than the private key $C_{sk}$.

The user terminal 100 acquires the encrypted information corresponding to predetermined type information from the issuance information management server 60 on the basis of the type information added to the encrypted issuance information. Thereby, it is possible to evaluate the submission status of the certificate information, using the encrypted issuance information of the predetermined type information.

The user terminal 100 acquires the encrypted information corresponding to the date and time information in the predetermined period from the issuance information management server 60 on the basis of the date and time information added to the encrypted issuance information. Thereby, it is possible to evaluate the submission status of the certificate information, using the encrypted issuance information issued in the predetermined period.

The encrypted issuance information includes the information obtained by encrypting information obtained by concatenating the user ID and the random number. Thereby, it is possible to suppress all pieces of decryption information that have been properly decrypted using the private key from being the same.

Furthermore, the information processing device 200 can suppress the user from disclosing disadvantageous information by detecting the submission omission of the issued certificate, so that the following effects can be obtained.

First, the user ID part of the issuance information, which is necessary to prove that all pieces of certificate information (credentials) have been disclosed, is anonymized. This content is not able to be confirmed by anyone other than the issuer terminal 50 that has registered the issuance information and the corresponding user. Therefore, it is possible to prevent leakage of privacy information that a user with a certain user ID has received a certain type of certificate information.

Furthermore, the verifier of the information processing device 200 can know which information the issuance information of the user at the time of being transmitted during proof by the user terminal 100 corresponds to, by comparing the issuance information with all pieces of encrypted issuance information of the issuance information management server 60 (on the blockchain), but the verifier is not able to know the issuance information on the blockchain is the issuance information of the user even if new issuance information is added thereafter. That is, the information on the blockchain is encrypted, and the verifier is not told the private key, so even if a new credential is issued to the user, the verifier will not know it.

Moreover, the verifier only knows the user's issuance information regarding the certificate type to be disclosed and is not able to know the issuance information of other certificate types. This also means that the private key is not disclosed to the verifier, so the verifier is not able to know information unrelated to the proof.

Next, an example of a hardware configuration of a computer that implements functions similar to those of the issuer terminal 50, the issuance information management server 60, the user terminal 100, and the information processing device 200 described in the above embodiment will be described in order.

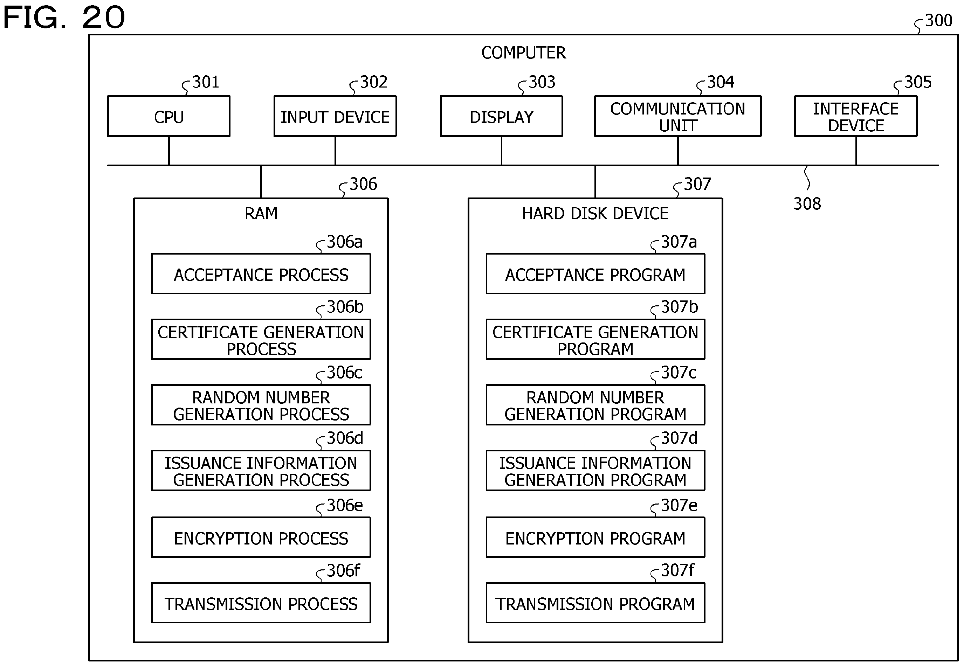

FIG. 20 is a diagram illustrating an example of a hardware configuration of a computer that implements functions similar to those of the issuer terminal according to the embodiment.

As illustrated in FIG. 20, a computer 300 includes a CPU 301 that executes various types of arithmetic processing, an input device 302 that receives data input from the user, and a display 303. Furthermore, the computer 300 includes a communication device 304 that exchanges data with an external device or the like via a wired or wireless network, and an interface device 305. Furthermore, the computer 300 includes a RAM 306 that temporarily stores various types of information, and a hard disk device 307. Then, each of the devices 301 to 307 is connected to a bus 308.

The hard disk device 307 includes an acceptance program 307a, a certificate generation program 307b, a random number generation program 307c, an issuance information generation program 307d, an encryption program 307e, and a transmission program 307f. Furthermore, the CPU 301 reads each of the programs 307a to 307f and expands the read program in the RAM 306.

The acceptance program 307a functions as an acceptance process 306a. The certificate generation program 307b functions as a certificate generation process 306b. The random number generation program 307c functions as a random number generation process 306c. The issuance information generation program 307d functions as an issuance information generation process 306d. The encryption program 307e functions as encryption process 306e. The transmission program 307f functions as a transmission process 306f.

Processing of the acceptance process 306a corresponds to the processing of the acceptance unit 55a. Processing of the certificate generation process 306b corresponds to the processing of the certificate generation unit 55b. Processing of the random number generation process 306c corresponds to the processing of the random number generation unit 55c. Processing of the issuance information generation process 306d corresponds to the processing of the issuance information generation unit 55d. Processing of the encryption process 306e corresponds to the processing of the encryption unit 55e. Processing of the transmission process 306f corresponds to the processing of the transmission unit 55f.

Note that each of the programs 307a to 307f may not necessarily be stored in the hard disk device 307 beforehand. For example, each of the programs is stored in a "portable physical medium" to be inserted in the computer 300, such as a flexible disk (FD), a compact disc read only memory (CD-ROM), a digital versatile disc (DVD), a magneto-optical disk, or an IC card. Then, the computer 300 may also read and execute each of the programs 307a to 307f.

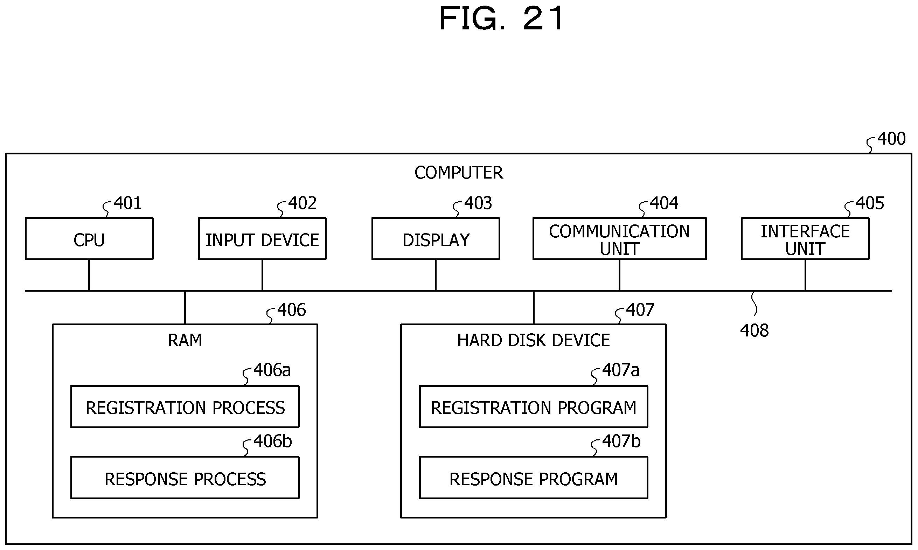

FIG. 21 is a diagram illustrating an example of a hardware configuration of a computer that implements functions similar to those of the issuance information management server according to the embodiment.

As illustrated in FIG. 21, a computer 400 includes a CPU 401 that executes various types of arithmetic processing, an input device 402 that receives data input from the user, and a display 403. Furthermore, the computer 400 includes a communication device 404 that exchanges data with an external device or the like via a wired or wireless network, and an interface device 405. Furthermore, the computer 400 includes a RAM 406 that temporarily stores various types of information and a hard disk device 407. Then, each of the devices 401 to 407 is connected to a bus 408.

The hard disk device 407 has a registration program 407a and a response program 407b. Furthermore, the CPU 401 reads each of the programs 407a and 407b and expands the read program in the RAM 406.

The registration program 407a functions as a registration process 406a. The response program 407b functions as a response process 406b.

Processing of the registration process 406a corresponds to the processing of the registration unit 65a. Processing of the response process 406b corresponds to the processing of the response unit 65b.

Note that each of the programs 407a and 407b may not necessarily be stored in the hard disk device 407 beforehand. For example, each of the programs is stored in a "portable physical medium" to be inserted in the computer 400, such as a flexible disk (FD), a CD-ROM, a DVD, a magneto-optical disk, or an IC card. Then, the computer 400 may read and execute each of the programs 407a and 407b.

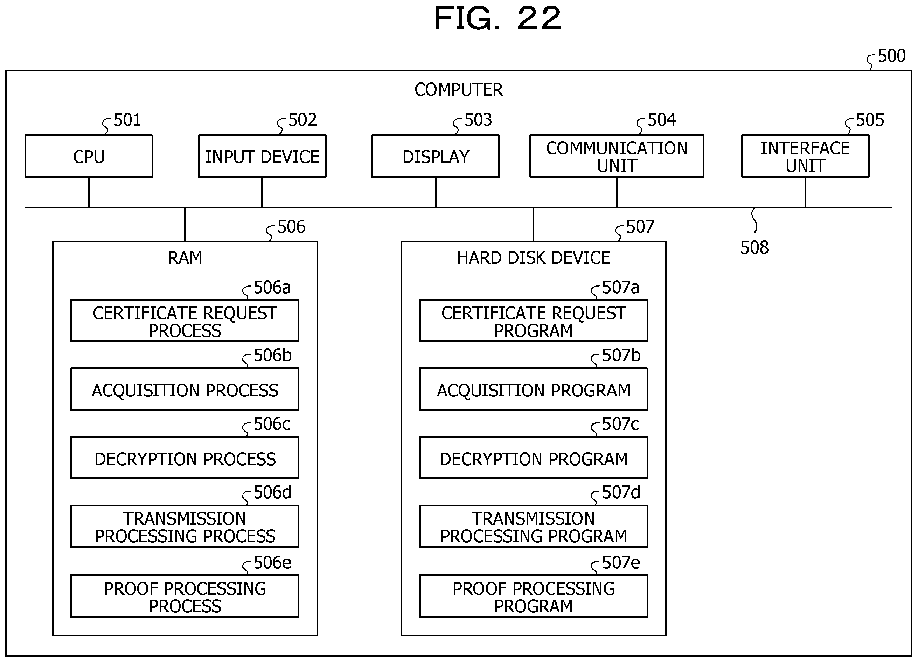

FIG. 22 is a diagram illustrating an example of a hardware configuration of a computer that implements functions similar to those of the user terminal according to the embodiment.

As illustrated in FIG. 22, a computer 500 includes a CPU 501 that executes various types of arithmetic processing, an input device 502 that receives data input from the user, and a display 503. Furthermore, the computer 500 includes a communication device 504 that exchanges data with an external device or the like via a wired or wireless network, and an interface device 505. Furthermore, the computer 500 includes a RAM 506 that temporarily stores various types of information and a hard disk device 507. Then, each of the devices 501 to 507 is connected to a bus 508.

The hard disk device 507 includes a certificate request program 507a, an acquisition program 507b, a decryption program 507c, a transmission processing program 507d, and a proof processing program 507e. Furthermore, the CPU 501 reads each of the programs 507a to 507e and expands the read program in the RAM 506.

The certificate request program 507a functions as a certificate request process 506a. The acquisition program 507b functions as an acquisition process 506b. The decryption program 507c functions as a decryption process 506c. The transmission processing program 507d functions as a transmission processing process 506d. The proof processing program 507e functions as a proof processing process 506e.

Processing of the certificate request process 506a corresponds to the processing of the certificate request unit 151. Processing of the acquisition process 506b corresponds to the processing of the acquisition unit 152. Processing of the decryption process 506c corresponds to the processing of the decryption unit 153. Processing of the transmission processing process 506d corresponds to the processing of the transmission processing unit 154. Processing of the proof processing process 506e corresponds to the processing of the proof processing unit 155.

Note that each of the programs 507a to 507e does not necessarily have to be stored in the hard disk device 507 beforehand. For example, each of the programs is stored in a "portable physical medium" to be inserted in the computer 500, such as a flexible disk (FD), a CD-ROM, a DVD, a magneto-optical disk, or an IC card. Then, the computer 500 may read and execute each of the programs 507a to 507e.

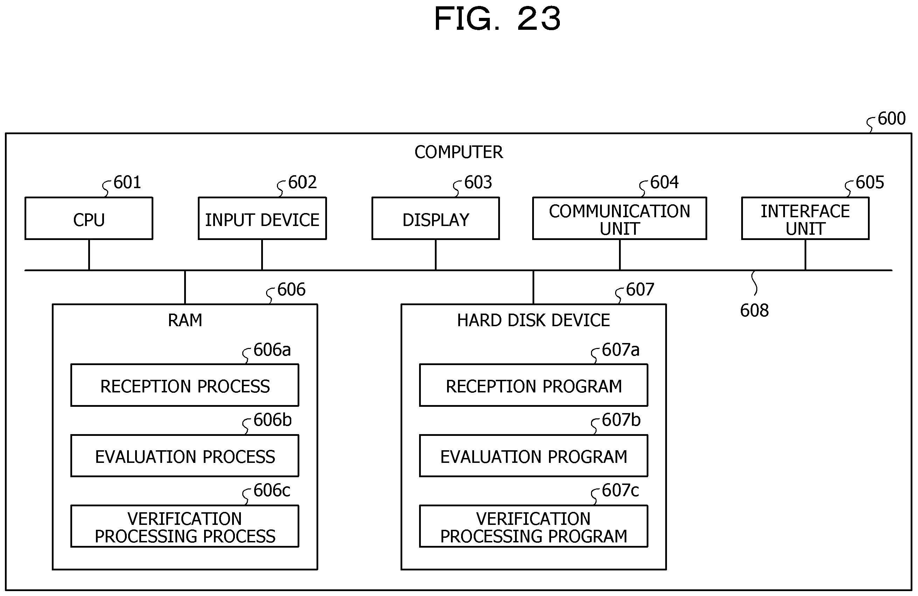

FIG. 23 is a diagram illustrating an example of a hardware configuration of a computer that implements functions similar to those of the user terminal according to the embodiment.

As illustrated in FIG. 23, a computer 600 includes a CPU 601 that executes various types of arithmetic processing, an input device 602 that receives data input from the user, and a display 603. Furthermore, the computer 600 includes a communication device 604 that exchanges data with an external device or the like via a wired or wireless network, and an interface device 605. Furthermore, the computer 600 includes a RAM 606 that temporarily stores various types of information and a hard disk device 607. Then, each of the devices 601 to 607 is connected to a bus 608.

The hard disk device 607 includes a reception program 607a, an evaluation program 607b, and a verification processing program 607c. Furthermore, the CPU 601 reads each of the programs 607a to 607c and expands the read program in the RAM 606.

The reception program 607a functions as a reception process 606a. The evaluation program 607b functions as an evaluation process 606b. The verification processing program 607c functions as a verification processing process 605c.

Processing of the reception process 606a corresponds to the processing of the reception unit 251. Processing of the evaluation process 606b corresponds to the processing of the evaluation unit 252. Processing of the verification processing process 606c corresponds to the processing of the verification processing unit 253.

Note that each of the programs 607a to 607c may not necessarily be stored in the hard disk device 607 beforehand. For example, each of the programs is stored in a "portable physical medium" to be inserted in the computer 600, such as a flexible disk (FD), a CD-ROM, a DVD, a magneto-optical disk, or an IC card. Then, the computer 600 may read and execute each of the programs 607a to 607c.

CITATION LIST

PATENT DOCUMENT

Patent Document 1: Japanese Laid-open Patent Publication No. 2007-183910
Patent Document 2: Japanese National Publication of International Patent Application No. 2006-510265

REFERENCE SIGNS LIST

50a, 50bIssuer terminal
51, 61, 110, 210Communication unit
52, 62, 120, 220Input unit
53, 63, 130, 230Display unit
54, 64, 140, 240Storage unit
54aUser information management table
55, 65, 150, 250Control unit
55aAcceptance unit
55bCertificate generation unit
55cRandom number generation unit
55dIssuance information generation unit
55eEncryption unit

55f Transmission unit
64a Issuance information table
65a Registration unit
65b Response unit
141 Public key information
142 Private key information
143 Certificate table
144 Encrypted issuance information table
151 Certificate request unit
152 Acquisition unit
153 Decryption unit
154 Transmission processing unit
155 Proof processing unit
241 Certificate management table
242 Verification information table
251 Reception unit
252 Evaluation unit
253 Verification processing unit

**Claims**

1. An information processing system comprising:

    a first information processing device and a second information processing device, wherein
    the first information processing device includes
    a first transmission unit that transmits one or more certificates issued to a specific user to the second information processing device,
    an acquisition unit that acquires one or more pieces of encrypted information that each include identification information of a user generated in response to issuance of a certificate to each of one or more users that include the specific user, and encrypted with a public key of the user to whom the certificate is issued,
    a decryption unit that generates one or more pieces of decryption information that respectively correspond to the one or more pieces of encrypted information by decrypting the acquired one or more pieces of encrypted information with a private key that corresponds to the public key of the specific user, and
    a second transmission unit that transmits the generated one or more pieces of decryption information to the second information processing device, and
    the second information processing device includes
    a reception unit that receives the one or more certificates transmitted by the first information processing device and the one or more pieces of decryption information transmitted by the first information processing device, and
    an evaluation unit that evaluates a submission status of the certificate by the specific user on the basis of the number of received one or more certificates and the number of pieces of decryption information that include the identification information of the specific user among the received one or more pieces of decryption information.

2. The information processing system according to claim 1, wherein the second information processing device further includes a verification processing unit that determines whether or not the decryption information is information that has been decrypted with the private key of the first information processing device on the basis of zero-knowledge proof.

3. The information processing system according to claim 1, wherein type information that indicates a type of a certificate that corresponds to the encrypted information is associated with the encrypted information in an unencrypted state, and the acquisition unit acquires the encrypted information associated with predetermined type information among a plurality of pieces of the encrypted information.

4. The information processing system according to claim 1, wherein date and time information that indicates date and time when a certificate that corresponds to the encrypted information has been issued is associated with the encrypted information in an unencrypted state, and the acquisition unit acquires the encrypted information associated with the date and time information in a predetermined period among a plurality of pieces of the encrypted information.

**5.** The information processing system according to claim 1, wherein the encrypted information includes the identification information of the user and a random number, and the decryption unit generates the decryption information that includes the identification information of the user and the random number by decrypting the acquired encrypted information with the private key that corresponds to the public key of the specific user.

**6.** A control method of controlling an information processing system that includes a first information processing device and a second information processing device, the control method comprising:

transmitting, by the first information processing device, one or more certificates issued to a specific user to the second information processing device;

acquiring, by the first information processing device, one or more pieces of encrypted information that each include identification information of a user generated in response to issuance of a certificate to each of one or more users that include the specific user, and encrypted with a public key of the user to whom the certificate is issued;

generating, by the first information processing device, one or more pieces of decryption information that respectively correspond to the one or more pieces of encrypted information by decrypting the acquired one or more pieces of encrypted information with a private key that corresponds to the public key of the specific user;

transmitting, by the first information processing device, the generated one or more pieces of decryption information to the second information processing device;

receiving, by the second information processing device, the one or more certificates transmitted by the first information processing device and the one or more pieces of decryption information transmitted by the first information processing device; and

evaluating, by the second information processing device, a submission status of the certificate by the specific user on the basis of the number of received one or more certificates and the number of pieces of decryption information that include the identification information of the specific user among the received one or more pieces of decryption information.

**7.** The control method according to claim 6, the control method further comprising:
determining, by the second information processing device, whether or not the decryption information is information that has been decrypted with the private key of the first information processing device on the basis of zero-knowledge proof.

**8.** The control method according to claim 6, wherein

type information that indicates a type of a certificate that corresponds to the encrypted information is associated with the encrypted information in an unencrypted state, and

the acquiring of the one or more pieces of encrypted information includes acquiring the encrypted information associated with predetermined type information among a plurality of pieces of the encrypted information.

**9.** The control method according to claim 6, wherein

date and time information that indicates date and time when a certificate that corresponds to the encrypted information has been issued is associated with the encrypted information in an unencrypted state, and

the acquiring of the one or more pieces of encrypted information includes acquiring the encrypted information associated with the date and time information in a predetermined period among a plurality of pieces of the encrypted information.

**10.** The control method according to claim 6, wherein

the encrypted information includes the identification information of the user and a random number, and

the generates of the one or more pieces of decryption information includes generating the decryption information that includes the identification information of the user and the random number by decrypting the acquired encrypted information with the private key that corresponds to the public key of the specific user.

# FIG. 1

MEDICAL HISTORY CERTIFICATE (USER ID: $ID_a$, DATE OF ADMISSION: aa/aa/aa, DATE OF DISCHARGE: bb/bb/bb, DISEASE NAME: CANCER) — 10a

MEDICAL HISTORY CERTIFICATE (USER ID: $ID_a$, DATE OF ADMISSION: cc/cc/cc, DATE OF DISCHARGE: dd/dd/dd, DISEASE NAME: FRACTURE) — 10b

MEDICAL HISTORY CERTIFICATE (USER ID: $ID_a$, DATE OF ADMISSION: cc/cc/cc, DATE OF DISCHARGE: dd/dd/dd, DISEASE NAME: FRACTURE) — 10a

ISSUANCE INFORMATION (USER ID: $ID_a$, TYPE: MEDICAL HISTORY) — 11b

ISSUANCE INFORMATION (USER ID: $ID_a$, TYPE: MEDICAL HISTORY) — 11a

ISSUANCE INFORMATION TABLE — 13

9a

9b

12

14

15

EP 4 181 048 A1

18

# FIG. 2

# FIG. 3

ISSUER TERMINAL  `50a

ENCRYPTED ISSUANCE INFORMATION  `52a

ISSUER TERMINAL  `50b

ENCRYPTED ISSUANCE INFORMATION  `52b

ISSUANCE INFORMATION MANAGEMENT SERVER  `60

ISSUANCE INFORMATION TABLE  `64a

ENCRYPTED ISSUANCE INFORMATION FOR USER 1A  `52a

ENCRYPTED ISSUANCE INFORMATION FOR USER 1B  `53a

ENCRYPTED ISSUANCE INFORMATION FOR USER 1C  `52b

...

CERTIFICATE INFORMATION  `51a

CERTIFICATE INFORMATION  `51a

CERTIFICATE INFORMATION  `51b

CERTIFICATE INFORMATION  `51b

VERIFICATION INFORMATION  `80

USER TERMINAL  `100

PUBLIC KEY $C_{pk}$

PRIVATE KEY $C_{sk}$

ZERO-KNOWLEDGE PROOF

INFORMATION PROCESSING DEVICE  `200

1A

EP 4 181 048 A1

# FIG. 4

50a

## ISSUER TERMINAL

51

COMMUNICATION UNIT

52

INPUT UNIT

53

DISPLAY UNIT

55

CONTROL UNIT

55a

ACCEPTANCE UNIT

55b

CERTIFICATE GENERATION UNIT

55c

RANDOM NUMBER GENERATION UNIT

55d

ISSUANCE INFORMATION GENERATION UNIT

55e

ENCRYPTION UNIT

55f

TRANSMISSION UNIT

54

STORAGE UNIT

54a

USER INFORMATION MANAGEMENT TABLE

# FIG. 5

54a

| USER ID | MEDICAL HISTORY INFORMATION | | | |
|---|---|---|---|---|
| | DATE OF ADMISSION | DATE OF DISCHARGE | DISEASE NAME | ... |
| $ID_a$ | aa/aa/aa | bb/bb/bb | CANCER | ... |
| $ID_b$ | ee/ee/ee | ff/ff/ff | PNEUMONIA | ... |
| ... | ... | ... | ... | ... |

# FIG. 6

| ENCRYPTION INFORMATION AREA | TYPE INFORMATION AREA | DATE AND TIME INFORMATION AREA |
|---|---|---|
| $enc(C_{pk}, r_1 \| \| ID_a)$ | MEDICAL HISTORY | 6/20/2020 12:00 |

# FIG. 7

# FIG. 8

64a

| ENCRYPTION INFORMATION | TYPE INFORMATION | DATE AND TIME INFORMATION |
|---|---|---|
| $enc(C_{pk}, r_1||ID_a)$ | MEDICAL HISTORY | 6/20/2020 12:00 |
| $enc(D_{pk}, r_2||ID_b)$ | MEDICAL HISTORY | 6/21/2020 15:00 |
| $enc(C_{pk}, r_3||ID_a)$ | MEDICAL HISTORY | 6/22/2020 13:40 |
| ... | ... | ... |

# FIG. 9

USER TERMINAL 100

COMMUNICATION UNIT 110

INPUT UNIT 120

DISPLAY UNIT 130

CONTROL UNIT 150

CERTIFICATE REQUEST UNIT 151

ACQUISITION UNIT 152

DECRYPTION UNIT 153

TRANSMISSION PROCESSING UNIT 154

PROOF PROCESSING UNIT 155

STORAGE UNIT 140

PUBLIC KEY INFORMATION 141

PRIVATE KEY INFORMATION 142

CERTIFICATE TABLE 143

ENCRYPTED ISSUANCE INFORMATION TABLE 144

# FIG. 10

143

| ITEM NUMBER | CERTIFICATE INFORMATION |
|---|---|
| 1 | CERTIFICATE INFORMATION ISSUED BY ISSUER TERMINAL 50a |
| 2 | CERTIFICATE INFORMATION ISSUED BY ISSUER TERMINAL 50b |

# FIG. 11

144

| ENCRYPTION INFORMATION | TYPE INFORMATION | DATE AND TIME INFORMATION |
|---|---|---|
| $enc(C_{pk}, r_1||ID_a)$ | MEDICAL HISTORY | 6/20/2020 12:00 |
| $enc(D_{pk}, r_2||ID_b)$ | MEDICAL HISTORY | 6/21/2020 15:00 |
| $enc(C_{pk}, r_3||ID_a)$ | MEDICAL HISTORY | 6/22/2020 13:40 |
| ... | ... | ... |

# FIG. 12

| ENCRYPTION INFORMATION | TYPE INFORMATION | DATE AND TIME INFORMATION |
|---|---|---|
| $enc(C_{pk}, r_1||ID_a)$ | | |
| $enc(D_{pk}, r_2||ID_b)$ | | |
| $enc(C_{pk}, r_3||ID_a)$ | | |

144

PRIVATE KEY $C_{sk}$

85

VERIFICATION INFORMATION

DECRYPTION INFORMATION $\{r_1||ID_a\}$ — 80a

DECRYPTION INFORMATION $\{grthnreh\}$ — 80b

DECRYPTION INFORMATION $\{r_3||ID_a\}$ — 80c

EP 4 181 048 A1

# FIG. 13

INFORMATION PROCESSING DEVICE — 200

COMMUNICATION UNIT — 210

INPUT UNIT — 220

DISPLAY UNIT — 230

CONTROL UNIT — 250

RECEPTION UNIT — 251

EVALUATION UNIT — 252

VERIFICATION PROCESSING UNIT — 253

STORAGE UNIT — 240

CERTIFICATE MANAGEMENT TABLE — 241

VERIFICATION INFORMATION TABLE — 242

# FIG. 14

241

| USER ID | CERTIFICATE INFORMATION |
|---------|-------------------------|
| $ID_a$ | CERTIFICATE INFORMATION RECEIVED FROM USER TERMINAL WITH USER ID "$ID_a$" |
| $ID_b$ | CERTIFICATE INFORMATION RECEIVED FROM USER TERMINAL WITH USER ID "$ID_b$" |
| $ID_c$ | CERTIFICATE INFORMATION RECEIVED FROM USER TERMINAL WITH USER ID "$ID_c$" |
| ... | ... |

# FIG. 15

242

| USER ID | VERIFICATION INFORMATION |
|---------|--------------------------|
| $ID_a$ | VERIFICATION INFORMATION RECEIVED FROM USER TERMINAL WITH USER ID "$ID_a$" |
| $ID_b$ | VERIFICATION INFORMATION RECEIVED FROM USER TERMINAL WITH USER ID "$ID_b$" |
| $ID_c$ | VERIFICATION INFORMATION RECEIVED FROM USER TERMINAL WITH USER ID "$ID_c$" |
| ... | ... |

# FIG. 16

START

S101

ACCEPT ACCESS FROM USER TERMINAL AND EXECUTE
AUTHENTICATION PROCESSING

S102

ACCEPT INFORMATION (USER ID AND PUBLIC KEY) OF
ISSUANCE REQUEST OF CERTIFICATE FROM USER TERMINAL
WHEN AUTHENTICATION IS SUCCESSFUL

S103

GENERATE CERTIFICATE INFORMATION

S104

GENERATE RANDOM NUMBER

S105

GENERATE ISSUANCE INFORMATION ON BASIS OF USER ID
AND RANDOM NUMBER

S106

GENERATE ENCRYPTED ISSUANCE INFORMATION USING
PUBLIC KEY

S107

TRANSMIT CERTIFICATE INFORMATION TO USER TERMINAL

S108

TRANSMIT ENCRYPTED ISSUANCE INFORMATION TO
ISSUANCE INFORMATION MANAGEMENT SERVER

END

# FIG. 17

```
                    ┌─────────────┐
                    │    START    │
                    └─────────────┘
                           │
                           ▼              ⌒S201
┌────────────────────────────────────────────────┐
│ ACCESS ISSUER TERMINAL AND EXECUTE AUTHENTICATION│
│                   PROCESSING                     │
└────────────────────────────────────────────────┘
                           │
                           ▼              ⌒S202
┌────────────────────────────────────────────────┐
│      TRANSMIT INFORMATION OF ISSUANCE REQUEST OF │
│ CERTIFICATE TO ISSUER TERMINAL WHEN AUTHENTICATION│
│                   IS SUCCESSFUL                   │
└────────────────────────────────────────────────┘
                           │
                           ▼              ⌒S203
┌────────────────────────────────────────────────┐
│      RECEIVE CERTIFICATE INFORMATION FROM ISSUER │
│                     TERMINAL                     │
└────────────────────────────────────────────────┘
                           │
                           ▼              ⌒S204
┌────────────────────────────────────────────────┐
│          REGISTER CERTIFICATE INFORMATION        │
└────────────────────────────────────────────────┘
                           │
                           ▼
                    ┌─────────────┐
                    │     END     │
                    └─────────────┘
```

# FIG. 18

START

S301
ACCEPT DISCLOSURE REQUEST OF CERTIFICATE INFORMATION FROM INFORMATION PROCESSING DEVICE

S302
TRANSMIT ISSUANCE INFORMATION REQUEST TO ISSUER MANAGEMENT SERVER

S303
RECEIVE ENCRYPTED ISSUANCE INFORMATION FROM ISSUANCE INFORMATION MANAGEMENT SERVER AND REGISTER ENCRYPTED ISSUANCE INFORMATION IN ENCRYPTED ISSUANCE INFORMATION TABLE

S304
DECRYPT EACH PIECE OF ENCRYPTED INFORMATION INCLUDED IN ENCRYPTED ISSUANCE INFORMATION TABLE USING PRIVATE KEY TO GENERATE VERIFICATION INFORMATION

S305
TRANSMIT CERTIFICATE INFORMATION AND VERIFICATION INFORMATION TO INFORMATION PROCESSING DEVICE

S306
EXECUTE ZERO-KNOWLEDGE PROOF WITH INFORMATION PROCESSING DEVICE

END

# FIG. 19

START

S401

TRANSMIT DISCLOSURE REQUEST OF CERTIFICATE
INFORMATION TO USER TERMINAL

S402

RECEIVE CERTIFICATE INFORMATION AND
VERIFICATION INFORMATION FROM USER TERMINAL
AND REGISTER INFORMATION IN STORAGE UNIT

S403

SPECIFY NUMBER (FIRST NUMBER) OF PIECES OF
CERTIFICATE INFORMATION

S404

SPECIFY NUMBER (SECOND NUMBER) OF PIECES OF
PROPERLY DECRYPTED DECRYPTION INFORMATION
AMONG PIECES OF DECRYPTION INFORMATION
INCLUDED IN VERIFICATION INFORMATION

S405

DETERMINE WHETHER OR NOT FIRST NUMBER
AND SECOND NUMBER MATCH

S406

MATCH?  NO

YES  S407

EXECUTE ZERO-KNOWLEDGE PROOF WITH USER
TERMINAL

S408

HAS DECRYPTION
BEEN PERFORMED WITH APPROPRIATE
PRIVATE KEY?  NO

YES  S409

EVALUATE THAT THERE IS NO SUBMISSION
OMISSION IN CERTIFICATE INFORMATION

S411

EVALUATE THAT THERE IS
SUBMISSION OMISSION
IN CERTIFICATE
INFORMATION

S410

OUTPUT EVALUATION RESULT

END

# FIG. 20

300 COMPUTER

| 301 CPU | 302 INPUT DEVICE | 303 DISPLAY | 304 COMMUNICATION UNIT | 305 INTERFACE DEVICE |

308

**306 RAM**

- 306a ACCEPTANCE PROCESS
- 306b CERTIFICATE GENERATION PROCESS
- 306c RANDOM NUMBER GENERATION PROCESS
- 306d ISSUANCE INFORMATION GENERATION PROCESS
- 306e ENCRYPTION PROCESS
- 306f TRANSMISSION PROCESS

**307 HARD DISK DEVICE**

- 307a ACCEPTANCE PROGRAM
- 307b CERTIFICATE GENERATION PROGRAM
- 307c RANDOM NUMBER GENERATION PROGRAM
- 307d ISSUANCE INFORMATION GENERATION PROGRAM
- 307e ENCRYPTION PROGRAM
- 307f TRANSMISSION PROGRAM

EP 4 181 048 A1

# FIG. 21

EP 4 181 048 A1

400

COMPUTER

| 401 | 402 | 403 | 404 | 405 |
|---|---|---|---|---|
| CPU | INPUT DEVICE | DISPLAY | COMMUNICATION UNIT | INTERFACE UNIT |

408

### 406 — RAM

**406a**
REGISTRATION PROCESS

**406b**
RESPONSE PROCESS

### 407 — HARD DISK DEVICE

**407a**
REGISTRATION PROGRAM

**407b**
RESPONSE PROGRAM

# FIG. 22

COMPUTER — 500

- CPU — 501
- INPUT DEVICE — 502
- DISPLAY — 503
- COMMUNICATION UNIT — 504
- INTERFACE UNIT — 505

508

**RAM — 506**

- CERTIFICATE REQUEST PROCESS — 506a
- ACQUISITION PROCESS — 506b
- DECRYPTION PROCESS — 506c
- TRANSMISSION PROCESSING PROCESS — 506d
- PROOF PROCESSING PROCESS — 506e

**HARD DISK DEVICE — 507**

- CERTIFICATE REQUEST PROGRAM — 507a
- ACQUISITION PROGRAM — 507b
- DECRYPTION PROGRAM — 507c
- TRANSMISSION PROCESSING PROGRAM — 507d
- PROOF PROCESSING PROGRAM — 507e

# FIG. 23

COMPUTER — 600

- CPU — 601
- INPUT DEVICE — 602
- DISPLAY — 603
- COMMUNICATION UNIT — 604
- INTERFACE UNIT — 605

RAM — 606
- RECEPTION PROCESS — 606a
- EVALUATION PROCESS — 606b
- VERIFICATION PROCESSING PROCESS — 606c

HARD DISK DEVICE — 607
- RECEPTION PROGRAM — 607a
- EVALUATION PROGRAM — 607b
- VERIFICATION PROCESSING PROGRAM — 607c

608

EP 4 181 048 A1

# FIG. 24

EP 4 181 048 A1

## INTERNATIONAL SEARCH REPORT

International application No.

PCT/JP2020/026858

A. CLASSIFICATION OF SUBJECT MATTER
Int. Cl. G06Q50/10(2012.01)i
FI: G06Q50/10

According to International Patent Classification (IPC) or to both national classification and IPC

B. FIELDS SEARCHED

Minimum documentation searched (classification system followed by classification symbols)
Int. Cl. G06Q10/00-99/00

Documentation searched other than minimum documentation to the extent that such documents are included in the fields searched
Published examined utility model applications of Japan    1922-1996
Published unexamined utility model applications of Japan  1971-2020
Registered utility model specifications of Japan          1996-2020
Published registered utility model applications of Japan  1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2018/150606 A1 (NOMURA RESEARCH INSTITUTE, LTD.) 23 August 2018, entire text, all drawings | 1-10 |
| A | WO 2019/101239 A2 (ALIBABA GROUP HOLDING LIMITED) 31 May 2019, entire document | 1-10 |
| A | US 2019/0103036 A1 (BOARD OF REGENTS OF THE UNIVERSITY OF TEXAS SYSTEM) 04 April 2019, entire document | 1-10 |

☐ Further documents are listed in the continuation of Box C.    ☒ See patent family annex.

* Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
|---|---|
| 01.10.2020 | 13.10.2020 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

Information on patent family members

| | International application No. |
|---|---|
| | PCT/JP2020/026858 |

| Patent Documents referred to in the Report | Publication Date | Patent Family | Publication Date |
|---|---|---|---|
| WO 2018/150606 A1 | 23.08.2018 | CA 3039894 A1<br>CN 110192217 A<br>US 2019/295164 A1 | |
| WO 2019/101239 A2 | 31.05.2019 | CA 3057396 A1<br>CN 110447023 A<br>EP 3596613 A2<br>JP 2020-528170 A<br>US 2020/294032 A1 | |
| US 2019/0103036 A1 | 04.04.2019 | (Family: none) | |

Form PCT/ISA/210 (patent family annex) (January 2015)

**REFERENCES CITED IN THE DESCRIPTION**

**Patent documents cited in the description**

- JP 2007183910 A

- JP 2006510265 A